# EUROPÄISCHE PATENTSCHRIFT

(11) **EP 4 437 640 B1**
(45) Veröffentlichungstag und Bekanntmachung des Hinweises auf die Patenterteilung: **27.08.2025**
(21) Anmeldenummer: 23713623.9
(22) Anmeldetag: 20.03.2023
(51) Int. Cl.: H02K 3/34, H02K 15/10

(54) **MASCHINE ZUR HERSTELLUNG EINES ISOLATORS**
MACHINE FOR PRODUCING AN INSULATOR
MACHINE DE FABRICATION D'UN ISOLATEUR

(30) Priorität: 30.03.2022 DE 102022107549
(43) Veröffentlichungstag der Anmeldung: 02.10.2024
(73) Patentinhaber: risomat GmbH & Co. KG, 88255 Baienfurt (DE)
(72) Erfinder: HALDER, Hubert, 88263 Horgenzell (DE)
(74) Vertreter: RavensPAT Patentanwälte Partnerschaft mbB
(86) Internationale Anmeldenummer: PCT/EP2023/057085
(87) Internationale Veröffentlichungsnummer: WO 2023/186608

(56) Entgegenhaltungen:
- CN-A- 113 595 348
- CN-U- 209 448 631
- CN-U- 209 832 803
- CN-U- 213 534 019
- JP-A- 2010 239 787
- JP-A- 2013 143 819
- US-A- 2 473 332
- US-A- 3 634 932
- US-A1- 2018 036 920
- US-A1- 2020 336 034
- US-B1- 6 282 773

## Beschreibung

### Stand der Technik

Maschinen zur Herstellung eines Isolators für einen Elektromotor sind bekannt. Ebenfalls sind Maschinen bekannt, um den Isolator an einer Komponente des Elektromotors zu positionieren. Eine solche Maschine ist in der CN 20 98 32 803 U offenbart.

Eine Aufgabe bei der Herstellung eines Isolators und der Positionierung des Isolators an der Komponente des Elektromotors ist, dass eine Länge des Isolators vergleichsweise genau herzustellen ist und der Isolator in Richtung seiner Längenerstreckung vergleichsweise genau an der Komponente des Elektromotors positioniert werden muss.

### Aufgabe und Vorteile der Erfindung

Aufgabe der vorliegenden Erfindung ist es, eine verbesserte Maschine, eine verbesserte Komponente der Maschine und ein verbessertes Herstellungsverfahren vorzuschlagen, mittels welchen eine Herstellung eines Isolators vereinfacht ist und/oder mittels welchen eine Positionierung des Isolators an der Komponente des Elektromotors vereinfacht ist. Ebenfalls wird ein verbesserter Isolator vorgeschlagen.

Die Aufgabe wird durch die Merkmale der unabhängigen Ansprüche gelöst.

In den abhängigen Ansprüchen sind vorteilhafte und zweckmäßige Ausführungsformen der Erfindung genannt.

Die Erfindung geht von einem Formwerkzeug mit einer Formleiste zur Umformung eines Isolators aus, wobei die Formleiste einen quaderförmigen Grundkörper aufweist, wobei der Grundkörper eine Oberseite aufweist, wobei die Formleiste ein erstes und ein zweites Umlenkelement aufweist, wobei das erste und das zweite Umlenkelement an der Oberseite des Grundkörpers von der Oberseite des Grundkörpers abstehend vorhanden sind, wobei das erste Umlenkelement mit einer Unterseite des ersten Umlenkelements mit der Oberseite des Grundkörpers verbunden ist, wobei das zweite Umlenkelement mit einer Unterseite des zweiten Umlenkelements mit der Oberseite des Grundkörpers verbunden ist, wobei das zweite Umlenkelement versetzt zum ersten Umlenkelement am Grundkörper ausgebildet ist, wobei das erste Umlenkelement eine erste Außenseite aufweist, wobei das erste Umlenkelement eine zweite Außenseite aufweist, wobei die zweite Außenseite des ersten Umlenkelements gegenüberliegend zur ersten Außenseite des ersten Umlenkelements vorhanden ist, wobei die erste und die zweite Außenseite des ersten Umlenkelements an einer Vorderseite des ersten Umlenkelements aufeinander zulaufen, sodass das erste Umlenkelement an der Vorderseite des ersten Umlenkelements eine Kante aufweist, wobei die zweite Außenseite des ersten Umlenkelements ausgehend von der Vorderseite des ersten Umlenkelements in Schubrichtung des Isolators gesehen sich von der ersten Außenseite des ersten Umlenkelements weg erstreckt, sodass das erste Umlenkelement ausgehend von der Vorderseite des ersten Umlenkelements sich verbreitert, wobei das zweite Umlenkelement eine erste Außenseite aufweist, wobei das zweite Umlenkelement eine zweite Außenseite aufweist, wobei die zweite Außenseite des zweiten Umlenkelements gegenüberliegend zur ersten Außenseite des zweiten Umlenkelements vorhanden ist, wobei die erste und die zweite Außenseite des zweiten Umlenkelements an einer Vorderseite des zweiten Umlenkelements aufeinander zulaufen, sodass das zweite Umlenkelement an der Vorderseite des zweiten Umlenkelements eine Kante aufweist, wobei die zweite Außenseite des zweiten Umlenkelements ausgehend von der Vorderseite des zweiten Umlenkelements in Schubrichtung des Isolators gesehen sich von der ersten Außenseite des zweiten Umlenkelements weg erstreckt, sodass das zweite Umlenkelement ausgehend von der Vorderseite des zweiten Umlenkelements in Schubrichtung gesehen sich verbreitert, wobei die Formleiste derart vorhanden ist, dass in einem Umformvorgang des Isolators, bei welchem der Isolator in Schubrichtung über das erste und das zweite Umlenkelement geschoben wird, zunächst ein Ende einer ersten Seite des Isolators entlang der zweiten Außenseite des ersten Umlenkelements in Schubrichtung geschoben wird, wobei das erste Umlenkelement hierbei die erste Seite des Isolators an einer ersten Solllinie des Isolators umknickt und anschließend ein Ende einer zweiten Seite des Isolators entlang der zweiten Außenseite des zweiten Umlenkelements in Schubrichtung geschoben wird, wobei das zweite Umlenkelement hierbei die zweite Seite an einer zweiten Solllinie des Isolators umknickt. Hierdurch ist eine Herstellung des Isolators vereinfacht.

Beispielsweise ist die Formleiste aus Metall ausgebildet. Denkbar ist, dass die Formleiste einstückig vorhanden ist. Z.B. sind das erste und das zweite Umlenkelement am Grundkörper integral vorhanden. Beispielsweise ist das erste und/oder das zweite Umlenkelement einstückig mit dem Grundkörper ausgebildet.

Beispielsweise wird ein Ausgangsmaterial des Isolators, z.B. ein Isolatormaterial, zur Herstellung des Isolators in einer Schubrichtung des Isolators entlang der Formleiste bewegt, wodurch eine Umformung des Ausgangsmaterials des Isolators hin zu einer finalen Form des Isolators aufgrund einer Wechselwirkung des Isolators mit der Formleiste geschieht.

Beispielsweise sind das erste und das zweite Umlenkelement als von der Oberseite des Grundkörpers abstehende Stege ausgebildet. Beispielsweise erstrecken sich die Umlenkelemente am Grundkörper entlang einer Länge. Beispielsweise erstreckt sich eine Länge eines Umlenkelements in Schubrichtung des Isolators. Beispielsweise erstreckt sich die erste Außenseite des ersten Umlenkelements in Schubrichtung des Isolators, Z.B. ist die erste Außenseite des ersten Umlenkelements vertikal ausgerichtet vorhanden. Zum Beispiel ist, in eine Schubrichtung des Isolators während des Umformvorgangs gesehen, das zweite Umlenkelement versetzt zum ersten Umlenkelement am Grundkörper ausgebildet. Beispielsweise erstreckt sich die erste Außenseite des zweiten Umlenkelements in Schubrichtung des Isolators, Z.B. ist die erste Außenseite des zweiten Umlenkelements vertikal ausgerichtet vorhanden. Beispielsweise sind die erste Außenseite des ersten Umlenkelements und die erste Außenseite des zweiten Umlenkelements zueinander parallel ausgerichtet und zueinander versetzt an der Formleiste vorhanden.

Beispielsweise weist der Grundkörper der Formleiste eine erste Seitenfläche, eine zweite Seitenfläche, zwei Stirnseiten, eine Unterseite und eine Oberseite auf. Zum Beispiel erstreckt sich die Oberseite in einer waagerechten Ebene. Beispielsweise weist der Grundkörper der Formleiste zwei sich gegenüberliegende und voneinander beabstandete Seitenflächen auf. Vorstellbar ist, dass der Grundkörper zwei sich gegenüberliegende und voneinander beabstandete Stirnseiten aufweist. Denkbar ist auch, dass jede der zwei Seitenflächen quer zu jeder der zwei Stirnseiten ausgerichtet ist. Beispielswiese weist der Grundkörper eine Unterseite und eine Oberseite aufweist, wobei die Unterseite, die Oberseite und die zwei Seitenflächen sich entlang der Längsachse des Grundkörpers erstrecken. Beispielsweise ist die Oberseite gegenüberliegend und beabstandet von der Unterseite vorhanden. Beispielsweise schließt eine Seitenfläche des Grundkörpers mit einem Ende an eine erste der zwei Stirnseiten des Grundkörpers an und mit einem zweiten Ende der Seitenfläche an eine zweite der zwei Stirnseiten des Grundkörpers an. Zum Beispiel sind die Stirnseiten des Grundkörpers quer zur Längsachse des Grundkörpers ausgerichtet vorhanden.

Beispielsweise erstrecken sich das erste und das zweite Umlenkelement entlang ihrer Längen entlang der Längsachse des Grundkörpers. Beispielsweise erstreckt sich jede der Unterseite des ersten und des zweiten Umlenkelements entlang der Länge des Umlenkelements in Richtung einer Längserstreckung des Grundkörpers und in einer Breite des Umlenkelements in Richtung einer Breitenerstreckung des Grundkörpers.

Beispielsweise erstrecken sich die erste Außenseite des ersten Umlenkelements und die erste Seitenfläche des Grundkörpers in einer gleichen Ebene. Beispielsweise erstrecken sich die erste Außenseite des zweiten Umlenkelements und die zweite Seitenfläche des Grundkörpers in einer gleichen Ebene. Beispielsweise sind die erste Außenseite des ersten Umlenkelements und die erste Außenseite des zweiten Umlenkelements über die Breite des Grundkörpers beabstandet vorhanden.

Weiter wird vorgeschlagen, dass das erste Umlenkelement an einer Oberseite des ersten Umlenkelements ein erstes Federorgan aufweist, welches von der Oberseite des ersten Umlenkelements abstehend vorhanden ist, wobei das erste Federorgan sich in Schubrichtung des Isolators gesehen am ersten Umlenkelement erstreckt, wobei eine Federorganvorderseite des ersten Federorgans beabstandet zur Kante des ersten Umlenkelements vorhanden ist, wobei eine Federorganoberseite des ersten Federorgans in Schubrichtung gesehen ausgehend von der Oberseite des ersten Umlenkelements von der Oberseite des ersten Umlenkelements weg verläuft, sodass beim Umformvorgang des Isolators eine Außenkante des umgeknickten Endes der ersten Seite des Isolators an einer ersten Federorganaußenseite des ersten Federorgans anliegt. Hierdurch ist eine Herstellung des Isolators vereinfacht.

Beispielsweise weist das zweite Umlenkelement an einer Oberseite des zweiten Umlenkelements ein zweites Federorgan auf, welches von der Oberseite des zweiten Umlenkelements abstehend vorhanden ist, wobei das zweite Federorgan sich in Schubrichtung des Isolators gesehen am zweiten Umlenkelement erstreckt, wobei eine Federorganvorderseite des zweiten Federorgans beabstandet zur Kante des zweiten Umlenkelements vorhanden ist, wobei eine Federorganoberseite des zweiten Federorgans in Schubrichtung gesehen ausgehend von der Oberseite des zweiten Umlenkelements von der Oberseite des zweiten Umlenkelements weg verläuft, sodass beim Umformvorgang des Isolators eine Außenkante des umgeknickten Endes der zweiten Seite des Isolators an einer ersten Federorganaußenseite des zweiten Federorgans anliegt.

Beispielsweise erstrecken sich die Federorganoberseiten und/oder die ersten Federorganaußenseiten des ersten und des zweiten Federorgans entlang der Längsachse des Grundkörpers und/oder entlang einer Längenerstreckung des ersten oder des zweiten Umlenkelements.

Beispielsweise ist eine Erstreckungsebene der ersten Federorganaußenseite des ersten und/oder des zweiten Federorgans parallel zur Ebene der ersten oder zweiten Seitenfläche des Grundkörpers ausgerichtet vorhanden. Beispielsweise ist eine Erstreckungsebene der ersten Federorganaußenseite des ersten und/oder des zweiten Federorgans in Breitenerstreckung des Grundkörpers von der Ebene der ersten oder zweiten Seitenfläche des Grundkörpers beabstandet vorhanden. Beispielsweise ist die Erstreckungsebene der ersten Federorganaußenseite des ersten und/oder des zweiten Federorgans in Breitenerstreckung des Grundkörpers von der Ebene der ersten Außenseite des ersten oder des zweiten Umlenkelements beabstandet vorhanden.

Beispielsweise weist das erste Federorgan eine zweite Federorganaußenseite auf. Z.B. weist das zweite Federorgan eine zweite Federorganaußenseite auf. Beispielweise sind die erste und die zweite Federorganaußenseite des ersten Federorgans über eine Breite des ersten Federorgans voneinander beabstandet vorhanden. Zum Beispiel sind die erste und die zweite Federorganaußenseite des zweiten Federorgans über eine Breite des zweiten Federorgans voneinander beabstandet vorhanden. Denkbar ist, dass das erste und das zweite Federorgan gleich breit ausgebildet sind. Beispielsweise erstrecken sich die zweite Federorganaußenseite des ersten Federorgans und die erste Federorganaußenseite des zweiten Federorgans in einer gemeinsamen ersten Ebene. Zum Beispiel erstrecken sich die zweite Federorganaußenseite des zweiten Federorgans und die erste Federorganaußenseite des ersten Federorgans in einer gemeinsamen zweiten Ebene. Beispielsweise sind die gemeinsame erste Ebene und die gemeinsame zweite Ebene über die Breite des ersten und/oder über die Breite des zweiten Federorgans voneinander beabstandet vorhanden. Denkbar ist, dass die gemeinsame erste Ebene und die gemeinsame zweite Ebene zueinander parallel ausgerichtet vorhanden sind.

Ebenfalls wird vorgeschlagen, dass die Formleiste ein Befestigungselement am Grundkörper aufweist, um die Formleiste an einem Formwerkzeug festzulegen. Hierdurch ist eine vergleichsweise einfache Montage der Formleiste an einem Formwerkzeug realisiert.

Beispielsweise ist das Befestigungselement als eine Durchgangsbohrung ausgebildet. Beispielsweise erstreckt sich die Durchgangsbohrung entlang einer Breite des Grundkörpers von einer Seitenfläche zur anderen Seitenfläche des Grundkörpers. Zum Beispiel weist die Formleiste zwei, drei oder mehr Befestigungselemente auf. Denkbar ist auch, dass das Befestigungselement in Form eines Stifts, eines Bolzens oder eines Innengewindes vorhanden ist.

Erfindungsgemäß weist das Formwerkzeug eine Schubleiste auf, wobei die Schubleiste quaderförmig ausgebildet ist und sich entlang einer Längsachse der Schubleiste erstreckt, wobei an einem ersten Ende der Schubleiste Schubleistenaußenseiten der Schubleiste, welche sich entlang der Längsachse erstrecken, nach Innen versetzt vorhanden sind, sodass der Isolator über die nach Innen versetzten Schubleistenaußenseiten geschoben werden kann, wobei der Isolator anliegend an den nach Innen versetzten Schubleistenaußenseiten angeordnet werden kann, wobei im Übergang der nach Innen versetzten Schubleistenaußenseiten zu den verbleibenden Schubleistenaußenseiten an einem zweiten Ende der Schubleiste ein Anschlag ausgebildet ist, an welchem der Isolator im angeordneten Zustand mit einer Stirnseite des Isolators ansteht, sodass der Isolator mit der Schubleiste entlang der Formleiste in Schubrichtung des Isolators und in Richtung Erstreckung der Längsachse der Schubleiste bewegbar ist, um den Isolator durch die Formleiste umzuformen. Hierdurch ist ein vergleichsweise flexibles oder universelles Formwerkzeug realisiert.

Erfindungsgemäß weist das Formwerkzeug eine Schubleiste auf. Vorstellbar ist, dass das Formwerkzeug einen Antrieb aufweist, um die Schubleiste zu bewegen. Beispielsweise ist der Antrieb derart vorhanden, dass die Schubleiste entlang der Längsachse der Schubleiste bewegbar ist. Beispielweise ist die Schubleiste entlang der Längsachse der Schubleiste hin und her bewegbar. Zum Beispiel ist ein an die Schubleiste angeordneter Isolator durch die Schubleiste entlang der Schubrichtung des Isolators bewegbar.

Beispielsweise weist das Formwerkzeug eine Aufnahme auf, an welcher die Formleiste geordnet ist. Beispielsweise umfasst die Aufnahme eine Führung, mittels welcher die Schubleiste entlang der Längsachse der Schubleiste geführt an der Aufnahme gelagert ist. Zum Beispiel ist der Antrieb an der Aufnahme vorhanden. Denkbar ist, dass die Aufnahme einen Hohlraum bildet, in welchem die Formleiste vorhanden ist und in welchem die Schubleiste beweglich geführt ist. Beispielsweise bilden Seiten des Hohlraums eine Führung für einen auf der Schubleiste angeordneten Isolator, wenn der Isolator entlang der Formleiste durch die Schubleiste bewegt wird.

Außerdem wird vorgeschlagen, dass die Schubleiste sich in eine Länge, in eine Breite und in eine Höhe erstreckt, wobei die Länge größer ist als die Höhe und die Höhe größer ist als die Breite, wobei die Schubleiste zwei große Schubleistenaußenseiten aufweist, welche sich in die Höhe und in die Länge erstrecken, wobei die Schubleiste eine erste und eine zweite kleine Schubleistenaußenseite aufweist, welche sich in die Breite und in die Länge erstrecken, wobei eine erste kleine Schubleistenaußenseite am ersten Ende eine Vertiefung aufweist, welche sich entlang einer Längsachse der Schubleiste erstreckt, sodass beim Umformvorgang des Isolators die umgeknickten Enden der ersten und der zweiten Seite des Isolators in die Vertiefung eingreifen können. Hierdurch ist ein Verkanten des Isolators oder ein Verkanten des Ausgangsmaterials des Isolators beim Umformvorgang vorteilhaft verhindert.

Beispielsweise erstreckt sich die Vertiefung der Schubleiste entlang der Längsachse über eine Länge, welche größer ist als eine Längenerstreckung des Isolators. Beispielsweise erstreckt sich die Vertiefung der Schubleiste von einer Stirnseite der Schubleiste am ersten Ende der Schubleiste bis zum Anschlag der Schubleiste. Beispielsweise erstreckt sich die Vertiefung der Schubleiste von einer Stirnseite der Schubleiste am ersten Ende der Schubleiste bis mindestens zum Anschlag der Schubleiste. Beispielseise erstreckt sich die Vertiefung der Schubleiste über die ganze Länge der Schubleiste. Beispielsweise erstreckt sich die Vertiefung der Schubleiste von der Stirnseite am ersten Ende der Schubleiste bis zu einer Stirnseite der Schubleiste am zweiten Ende der Schubleiste.

Beispielsweise ist die Vertiefung der Schubleiste als eine Rinne, als eine Kerbe oder als eine Einkerbung ausgebildet. Beispielsweise sind die Formleiste und die Schubleiste derart an der Aufnahme gelagert, dass bei einem Umformvorgang des Isolators das erste und oder das zweite Federorgan in die Vertiefung der Schubleiste eingreift. Zum Beispiel sind die Formleiste und die Schubleiste derart an der Aufnahme gelagert, dass bei einem Umformvorgang des Isolators das umgeknickte Ende der ersten Seite des Isolators und/oder das umgeknickte Ende der zweiten Seite des Isolators in die Vertiefung der Schubleiste eingreift.

Zum Beispiel ist am zweiten Ende der Schubleiste ein Verlängerungselement angeordnet, z.B. einstückig mit der Schubleiste. Denkbar ist auch, dass das Verlängerungselement als eine Schubstange des Antriebs ausgebildet ist, welche an der Stirnseite am zweiten Ende der Schubleiste angreift.

Vorstellbar ist, dass eine Außenseite am zweiten Ende der Schubleiste an welcher die Vertiefung vorhanden ist, beim Umformvorgang des Isolators an der Oberseite des ersten Umlenkelements und/oder an der Oberseite des zweiten Umlenkelements zumindest abschnittsweise anliegt. Denkbar ist, dass die Außenseite der Schubleiste, an welcher die Vertiefung vorhanden ist, durch die Oberseite des ersten Umlenkelements und/oder durch die Oberseite des zweiten Umlenkelements beim Umformvorgang des Isolators zumindest abschnittsweise geführt vorhanden ist.

In einer weiteren denkbaren Ausführungsform ist ein Übertragungswerkzeug vorgeschlagen, wobei das Übertragungswerkzeug ein Formwerkzeug nach einer der vorangegangen genannten Ausführungsvarianten aufweist, wobei das Übertragungswerkzeug ein Übertragungsmagazin aufweist, wobei das Übertragungsmagazin sich in eine Längsrichtung erstreckt, wobei das Übertragungsmagazin einen Hohlraum aufweist, in welchen der Isolator mittels der Schubleiste in Längsrichtung des Übertragungsmagazins einführbar ist, wobei der Hohlraum in Längsrichtung konisch zulaufend ausgebildet ist. Hierdurch ist eine Übertragung des Isolators in eine Aufnahme eines Stators realisierbar.

Denkbar ist, dass die Aufnahme des Stators als eine Statornut ausgebildet ist. Vorstellbar ist, dass der Stator derart vorhanden ist, dass in die Aufnahme des Stators ein einziger Isolator einführbar ist oder zwei oder mehr Isolatoren einschiebbar sind.

Vorteilhafterweise ist das Übertragungswerkzeug unmittelbar an der Aufnahme anordenbar ausgebildet, sodass die Schubleiste den Isolator nach dem Umformvorgang, bei welchem die Schubleiste den Isolator entlang der Formleiste bewegt hat, in Schubrichtung des Isolators in den Hohlraum des Übertragungswerkzeugs einschieben kann.

Beispielsweise umfasst das Übertragungsmagazin genau zwei Hohlräume. Beispielsweise sind beide Hohlräume identisch ausgebildet. Denkbar ist, dass das Übertragungswerkzeug beweglich gelagert ist, sodass die beiden Hohlräume abwechselnd an die Aufnahme des Formwerkzeugs heranbewegbar sind. Beispielsweise umfasst das Übertragungswerkzeug einen Motor, um das Übertragungswerkzeug zu bewegen. Denkbar ist auch, dass das Übertragungsmagazin zwei oder mehr Hohlräume aufweist.

Weiter wird vorgeschlagen, dass der Hohlraum des Übertragungsmagazins eine erste und eine zweite schmale Hohlraumseite aufweist, wobei der Hohlraum eine erste und eine zweite breite Hohlraumseite aufweist, wobei an einer ersten Innenseite der ersten breiten Hohlraumseite des Hohlraums ein erstes Federelement abstehend von der ersten Innenseite vorhanden ist, wobei sich das erste Federelement über die Längserstreckung des Hohlraums erstreckt, sodass beim Einschubvorgang des Isolators in den Hohlraum eine erste Seite des Isolators durch das erste Federelement in ein Hohlrauminneres verformt wird. Hierdurch ist der Isolator derart verformbar, dass ein Einführen des Isolators in die Aufnahme des Stators ermöglicht ist.

Beispielsweise ist an einer zweiten Innenseite der zweiten breiten Hohlraumseite ein zweites Federelement abstehend von der zweiten Innenseite vorhanden ist, wobei sich das zweite Federelement über die Längserstreckung des Hohlraums erstreckt, sodass beim Einschubvorgang des Isolators in den Hohlraum eine zweite Seite des Isolators durch das zweite Federelement in das Hohlrauminnere verformt wird.

Zum Beispiel sind das erste und das zweite Federelement sich gegenüberliegend und beabstandet im Hohlraum vorhanden. Denkbar ist, dass die zwei schmalen Hohlraumseiten und die zwei breiten Hohlraumseiten des Übertragungsmagazins den Hohlraum begrenzen, wobei der Hohlraum zwei Stirnseiten aufweist, wobei die Stirnseiten offen ausgebildet sind, sodass ein Isolator in den Hohlraum hineinbewegbar und/oder aus dem Hohlraum herausbewegbar ist.

Denkbar ist, dass das Übertragungswerkzeug aus zwei oder mehr Teilen ausgebildet ist, welche miteinander verbunden sind, um den Hohlraum des Übertragungswerkzeugs zu bilden. Hierdurch ist eine Herstellung des Übertragungswerkzeugs vereinfacht.

Auch wird vorgeschlagen, dass an einem Endabschnitt des Hohlraums an der ersten schmalen Hohlraumseite ein drittes Federelement abstehend von einer Innenseite der ersten schmalen Hohlraumseite vorhanden ist, wobei am Endabschnitt des Hohlraums an der zweiten schmalen Hohlraumseite ein viertes Federelement abstehend von einer Innenseite der zweiten schmalen Hohlraumseite vorhanden ist, wobei das dritte und das vierte Federelement sich in Längserstreckung des Hohlraums erstrecken, sodass eine dritte Seite des Isolators durch das dritte Federelement in das Hohlrauminnere verformt wird und eine vierte Seite des Isolators durch das vierte Federelement in das Hohlrauminnere verformt wird. Hierdurch ist der Isolator im eingeschobenen Zustand in das Übertragungswerkzeug derart verjüngt oder verkleinert vorhanden, dass der Isolator in eine Aufnahme eines Stators eingeschoben werden kann.

Beispielsweise ist ein Federelement als eine Erhebung oder als ein Vorsprung an einer Hohlraumseite ausgebildet. Beispielsweise ist das Federelement leistenartig vorhanden, z.B. als eine Leiste. Beispielsweise sind die Federelemente konisch zulaufend vorhanden. Denkbar ist, dass die Federelemente in Richtung Stirnseite des Hohlraums am Endabschnitt des Hohlraums in das Hohlrauminnere zulaufend vorhanden sind.

Eine beispielhafte Ausführung der Erfindung ist eine Maschine zur Herstellung eines Isolators, wobei die Maschine ein Übertragungswerkzeug nach einer der vorangegangen genannten Ausführungsvarianten aufweist und/oder wobei die Maschine eine Formleiste nach einer der vorangegangen genannten Ausführungsformen aufweist und/oder wobei die Maschine ein Formwerkzeug nach einer der vorangegangen genannten Ausführungen aufweist. Hierdurch ist eine automatische Herstellung eines oder mehrerer Isolatoren realisierbar.

Außerdem wird vorgeschlagen, dass die die Maschine ein Materialmagazin, eine Prägevorrichtung, eine Stanzvorrichtung, eine Bördelvorrichtung, eine Transportvorrichtung und/oder eine Umformvorrichtung ausweist. Denkbar ist, dass das Materialmagazin, die Prägevorrichtung, die Stanzvorrichtung, die Bördelvorrichtung, die Transportvorrichtung und/oder die Umformvorrichtung an einem Gestell der Maschine befestigt sind. Denkbar ist, dass das Materialmagazin, die Prägevorrichtung, die Stanzvorrichtung, die Bördelvorrichtung, die Transportvorrichtung und/oder die Umformvorrichtung am Gestell in eine Vorschubrichtung eines mittels der genannten Elemente zu bearbeitenden Isolatormaterials gesehen hintereinander vorhanden sind.

Denkbar ist, dass die Ümformvorrichtung Bestandteil des Formwerkzeugs ist.

Erfindungsgemäß wird ein Herstellungsverfahren zur Herstellung eines Isolators unter Verwendung eines Formwerkzeugs nach einer der vorangegangen genannten Ausführungen und/oder unter Verwendung einer Maschine nach einer der vorangegangen genannten Ausführungsvarianten vorgeschlagen, wobei das Herstellungsverfahren folgende Verfahrensschritte umfasst:
- Abwickeln von Isolatormaterial von einer Isolatormaterialrolle in eine Vorschubrichtung, wobei die Isolatormaterialrolle beweglich im Materialmagazin gehalten ist,
- Prägen einer ersten Sickung entlang der Vorschubrichtung in das abgewickelte Isolatormaterial durch eine erste Prägevorrichtung,
- Ausstanzen von Material aus dem abgewickelten Isolatormaterial, sodass Isolatormaterial im Bereich einer Außenkante des Isolatormaterials entfernt ist,
- Umklappen des nach dem Ausstanzvorgang verbliebenen Materials im Bereich der Außenkante des Isolatormaterials um die in Vorschubrichtung geprägte ersten Sickung,
- Prägen einer zweiten Sickung quer zur Vorschubrichtung in das Isolatormaterial durch eine zweite Prägevorrichtung,
- Abschneiden eines Endes des abgewickelten Isolatormaterials quer zur Vorschubrichtung, sodass ein Isolator abgeschnitten ist,
- Umformen des Isolators durch das Formwerkzeug
- Einführen des umgeformten Isolators in Schubrichtung in das Übertragungswerkzeug.

Bevorzugt erfolgen die vorangegangen genannten Verfahrensschritte in genau der Reihenfolge in welcher sie vorangegangen aufgeführt sind. Denkbar ist jedoch auch, dass die Reihenfolge der Verfahrensschritte vertauscht werden kann.

Beispielsweise ist eine Isolatormaterialrolle drehbar am Materialmagazin lagerbar, sodass Isolatormaterial von der Isolatormaterialrolle abgewickelt werden kann. Vorstellbar ist, dass das Isolatormaterial aufgewickelt auf der Isolatormaterialrolle vorhanden ist. Beispielsweise ist das Isolatormaterial bandförmig vorhanden. Zum Beispiel umfasst die Maschine eine Transportvorrichtung, um das Isolatormaterial in eine Vorschubrichtung von der Isolatormaterialrolle abzuwickeln und durch die Maschine zu fördern.

Denkbar ist, dass folgende Einheiten der Maschine in Vorschubrichtung des Isolatormaterials gesehen nacheinander vorhanden sind: Materialmagazin, erste Prägevorrichtung, Stanzvorrichtung, Bördelvorrichtung, erste Transportvorrichtung, zweite Prägevorrichtung, zweite Transportvorrichtung, Umformvorrichtung. Vorstellbar ist auch, dass die Einheiten in einer anderen als der vorangegangen genannten Reihenfolge an der Maschine vorhanden sind. Ebenfalls ist es vorstellbar, dass nur eine einzige Transportvorrichtung oder mehr als zwei Transportvorrichtungen an der Maschine vorhanden sind.

Vorstellbar ist, dass ein Isolator vom bandförmigen Isolatormaterial quer zur Vorschubrichtung des Isolatormaterials abgetrennt wird. Beispielsweise ist eine Längsachse des Isolators quer zur Vorschubrichtung des Isolatormaterials vorhanden. Denkbar ist weiterhin, dass der abgetrennte Isolator in Richtung seiner Langsachse in eine Vorschubrichtung des Isolators bewegt wird. Vorstellbar ist, dass eine Breite des bandartigen Isolatormaterials eine Gesamtlänge des Isolators definiert. Beispielsweise ist die Gesamtlänge des Isolators vor der Umformung des abgeschnittenen Isolators oder des abgeschnittenen Isolatormaterials durch die Bördelvorrichtung zu sehen.

Beispielsweise wird das Isolatormaterial von der Isolatormaterialrolle abgewickelt und in Vorschubrichtung des Isolatormaterials mittels der Transportvorrichtung durch die Maschinen bewegt. Zum Beispiel wird nach dem Abwickeln mittels einer ersten Prägevorrichtung eine Quersickung in Vorschubrichtung des Isolatormaterials im Bereich einer Außenkante des Isolatormaterials in das Isolatormaterials eingebracht. Zum Beispiel wird anschließend Material im Bereich der Außenkante vom Isolatormaterial ausgestanzt. Beispielsweise erstreckt sich eine Stanzstelle entlang eines Abschnitts der Quersickung oder entlang mehrerer Abschnitte der Quersickung. Zum Beispiel wird anschließend das im Bereich der Außenkante verbliebene Isolatormaterial durch die Bördelvorrichtung an der Quersickung umgebogen. Beispielsweise ist das verbliebene Isolatormaterial des Bereichs der Außenkante im umgebördelten Zustand parallel zum Isolatormaterial ausgerichtet vorhanden. Durch die Umbördelung des verbliebenen Isolatormaterials des Bereichs der Außenkante, ist der Isolator in diesem Bereich vergleichsweise versteift ausgebildet.

Denkbar ist weiter, dass anschließend in das Isolatormaterial vier Längssickungen durch eine weitere Prägevorrichtung eingebracht werden. Denkbar ist, dass die vier Längssickungen sich quer zur Vorschubrichtung des Isolatormaterials erstrecken. Vorstellbar ist, dass jede der vier Längssickungen von den verbliebenen drei Längssickungen beabstandet vorhanden ist. Beispielweise sind die Längssickungen parallel zueinander ausgerichtet vorhanden. Beispielsweise ist eine Längssickung als eine Solllinie des Isolators vorhanden. Beispielsweise definiert ein Abstand von einer ersten und einer zweiten der vier Längssickungen in Vorschubrichtung gesehen eine Breite des Isolators. Zum Beispiel definiert ein Abstand von der zweiten Längssickung und einer dritten Längssickung der vier Längssickungen in Vorschubrichtung gesehen eine Höhe des Isolators. Vorstellbar ist, dass ein Abstand von der dritten Längssickung zu einer vierten Längssickung der vier Längssickungen in Vorschubrichtung gesehen eine Breite des Isolators.

Denkbar ist weiterhin, dass zwei Längssickungen als Solllinien des Isolators vorhanden sind. Beispielsweise schließen die zwei Längssickungen, welche als Solllinien des Isolators vorhanden sind, die beiden verbleibenden Längssickungen der vier Längsickungen in Vorschubrichtung des Isolatormaterials gesehen zwischen sich ein. Zum Beispiel ist die erste und die vierte Längssickung als eine Solllinie ausgebildet. Vorstellbar ist auch, dass alle vier Längssickungen als Solllinien vorhanden sind, wobei an den Solllinien das Isolatormaterial durch das Formwerkzeug umgebogen oder umgeknickt werden soll, um den Isolator im Endzustand herzustellen.

Vorstellbar ist weiterhin, dass anschließend der ausgestanzte und geprägte Bereich des Isolatormaterials zum Formwerkzeug transportiert wird. Beispielsweise wird der ausgestanzte und geprägte Bereich des Isolatormaterials mittels der Transportvorrichtung zum Formwerkzeug transportiert. Beispielweise wird der ausgestanzte und geprägte Bereich des Isolatormaterials quer zur Vorschubrichtung des Isolatormaterials durch das Formwerkzeug abgetrennt. Beispielsweise ist eine Trennlinie, an welcher der ausgestanzte und geprägte Bereich des Isolatormaterials abgetrennt wird, parallel zu den Längssickungen des ausgestanzte und geprägte Bereichs des Isolatormaterials vorhanden. Vorstellbar ist außerdem, dass anschließend oder gleichzeitig der ausgestanzte und geprägte Bereich des Isolatormaterials durch das Formwerkzeug entlang zweier der Längssickungen umgebördelt oder umgebogen wird. Beispielsweise wird anschließend oder gleichzeitig mit dem Abtrennen das Isolatormaterial im Bereich der zweite Längssickung und im Bereich der dritten Längssickung durch das Formwerkzeug umgebogen. Beispielweise ist der ausgestanzte und geprägte Bereich des Isolatormaterials nach dem Abtrennen und Umformen U-förmig vorhanden. Beispielsweise wird nach dem Abtrennen aus dem abgetrennten, ausgestanzten und geprägten Isolatormaterial der Isolator mittels des Formwerkzeugs hergestellt.

Ebenfalls wird vorgeschlagen, dass der Verfahrensschritt des Umformens des Isolators durch das Formwerkzeug folgende Verfahrensschritte aufweist:
- Umformen des Isolators durch das Formwerkzeug, sodass der Isolator U-förmig vorhanden ist,
- Aufschieben des Isolators auf die Schubleiste, sodass der Isolator am Anschlag der Schubleiste mit der Stirnseite des Isolators ansteht,
- Bewegen des Isolators in Schubrichtung des Isolators mit der Schubleiste, sodass der Isolator entlang der Oberseite der Formleiste bewegt wird,
- Umformen eines Endes der ersten Seite des Isolators und eines Endes der zweiten Seite des Isolators durch das Formwerkzeug.

Beispielsweise wird das abgetrennte Isolatormaterial, welches im Endzustand den Isolator bildet, nach der Umformung zur einer U-Form, auf die Schubleiste aufgeschoben. Denkbar ist, dass hierzu die Schubleiste aus einer Ausgangsstellung in Vorschubrichtung des Isolators an den Isolator heranbewegt wird, bis der Isolator mit dem umgebördelten Bereich am Anschlag der Schubleiste ansteht. Denkbar ist weiter, dass anschließend die Schubleiste mit dem Isolator in Vorschubrichtung des Isolators weiterbewegt wird. Vorstellbar ist, dass die Schubleiste den Isolator in Vorschubrichtung entlang der Formleiste bewegt, sodass das erste und das zweite Ende des Isolators jeweils entlang einer Längssickung umgebogen wird. Zum Beispiel werden das erste Ende des Isolators entlang der ersten Längssickung umgebogen. Denkbar ist, dass das zweite Ende des Isolators entlang der vierten Längssickung umgebogen wird. Beispielsweise sind das umgebogene erste und zweite Ende des Isolators im umgebogenen Zustand überlappend vorhanden.

Beispielsweise bewegt die Schubleiste den Isolator anschließend in Vorschubrichtung in Richtung Übertragungswerkzeug weiter und setzt den Isolator in das Übertragungswerkzeug ein. Denkbar ist weiter, dass anschließend die Schubleiste entgegen der Vorschubrichtung des Isolators bewegt wird, wobei der Isolator im Übertragungswerkzeug verbleibt. Beispielweise wird anschließend die Schubleiste entgegen der Vorschubrichtung bis zu ihrer Ausgangsstellung zurück bewegt.

Zum Beispiel wird das Übertragungswerkzeug mit dem Isolator an einen Stator heranbewegt. Vorstellbar ist weiter, dass im angeordneten Zustand des Übertragungswerkzeugs am Stator, der Isolator durch einen Bewegung eines Ausstoßers der Maschine aus dem Übertragungswerkzeug in eine Statornut des Stators bewegt wird. Beispielsweise wird der Ausstoßer in Vorschubrichtung des Isolators in das Übertragungswerkzeug hineinbewegt, wobei hierdurch der Isolator am Ausstoßer ansteht und mit dem Ausstoßer in Vorschubrichtung mitbewegt wird. Vorstellbar ist, dass der Isolator durch den Ausstoßer so weit in die Statornut hineinbewegt wird, bis er mit seinem umgebördelten Bereich der Außenkante an einer Außenfläche des Stators zum anliegen kommt.

In einer weiteren denkbaren Ausführungsform wird ein Isolator vorgeschlagen, welcher mit einem Herstellungsverfahren nach einer der vorangegangenen Ausführungsvarianten hergestellt wurde.

Beispielsweise erstreckt sich der Isolator in eine Länge, in eine Breite und in eine Höhe. Denkbar ist, dass der Isolator einstückig ausgebildet ist. Beispielsweise weist der Isolator eine erste und eine zweite Schmalseite und eine erste und zweite Längsseite auf. Beispielsweise erstrecken sich die Schmalseiten entlang der Länge und der Höhe des Isolators. Beispielsweise erstrecken sich die Längsseiten entlang der Länge und der Breite des Isolators.

Vorstellbar ist weiter, dass der Isolator vier Längssickungen aufweist, welche sich entlang der Längsachse des Isolators erstrecken. Beispielsweise erstreckt sich die Längsachse entlang der Länge des Isolators. Beispielsweise ist der Isolator entlang der vier Längssickungen umgebogen vorhanden, sodass entlang der Längssickungen Kanten des Isolators ausgebildet sind.

Beispielsweise ist ein erstes kurzes Ende des Isolators einer ersten Seite an einer ersten der Längssickungen umgebogen vorhanden. Beispielsweise ist ein zweites kurzes Ende des Isolators einer zweiten Seite an einer vierten der Längssickungen umgebogen vorhanden. Beispielsweise sind das erste und das zweite kurze Ende sich überlappend vorhanden. Denkbar ist, dass das erste und das zweite kurze Ende sich entlang der Länge und der Höhe des Isolators erstrecken und eine schmale Seitenfläche des Isolators bilden. Vorstellbar ist, dass das erste und das zweite kurze Ende des Isolators zusammen, z.B. sich überlappend, eine schmale Seitenfläche des Isolators bilden.

Beispielsweise weist der Isolator eine Quersickung auf. Denkbar ist, dass die Quersickung sich entlang der Höhe und der Breite erstreckt. Denkbar ist, dass der Isolator eine Fahne aufweist, welche im Bereich der Quersickung mit dem verbleibenden Isolator verbunden ist, wobei die Fahne an der Quersickung umgebogen ist, sodass die Fahne mit dem verbleibenden Isolator überlappend vorhanden ist. Hierdurch ist der Isolator im Bereich der Fahne verstärkt ausgebildet.

Denkbar ist, dass der Isolator vor eine Umformung entlang der Längs- und der Quersickung reckteckförmig ausgebildet ist, wobei zwei Kanten des rechteckförmigen Isolators sich im umgebogenen Zustand des Isolators entlang der Länge des Isolators erstrecken und zwei weitere Kanten des rechteckförmigen Isolators sich im umgebogenen Zustand des Isolators entlang der Breite und Höhe des Isolators erstrecken. Wobei an einer der Kanten, welche sich im umgebogenen Zustand des Isolators entlang der Breite und Höhe des Isolators erstrecken die Fahne vorhanden ist.

Vorstellbar ist, dass der Isolator im angeordneten Zustand am Stator mit der Fahne an einer Außenseite des Stators ansteht oder aufsteht. Hierdurch ist eine vergleichsweise einfache und vergleichsweise genaue Positionierung des Isolators in einer Statornut des Stators realisiert. Vorstellbar ist auch, dass die Fahne die zweite und die dritte Längssickung aufweist und im Endzustand des Isolators an den Längssickungen umgebogen vorhanden ist.

### Figurenbeschreibung

Mehrere Ausführungsbeispiele werden anhand der nachstehenden Zeichnungen unter Angabe weitere Einzelheiten und Vorteile näher erläutert:
Es zeigen:
- Figur 1: eine Draufsicht auf eine Maschine mit daran angeordnetem Übertragungswerkzeug,
- Figur 2: in einer vergrößerte Darstellung einen Ausschnitt einer Draufsicht auf die Maschine mit angeordneten Vorrichtungen,
- Figur 3: eine perspektivische Ansicht von schräg seitlich oben auf ein Materialmagazin mit daran angeordneter Isolatormaterialrolle,
- Figur 4: eine Ansicht von schräg seitlich vorne auf eine Prägevorrichtung zum prägen einer Quersickung,
- Figur 5: eine Ansicht von schräg seitlich vorne auf eine Stanzvorrichtung,
- Figur 6: eine Ansicht von schräg seitlich vorne auf eine weitere Prägevorrichtung zum prägen einer Längssickung,
- Figur 7: eine Ansicht von schräg seitlich vorne auf eine Transportvorrichtung,
- Figur 8: eine Ansicht von schräg seitlich vorne auf eine Umformvorrichtung,
- Figur 9: eine Ansicht von schräg seitlich vorne auf ein Übertragungswerkzeug,
- Figur 10: eine Ansicht von schräg seitlich oben auf einen Stator mit in Statornuten des Stators eingebrachte Isolatoren,
- Figur 11: eine Ansicht von schräg seitlich unten auf das Umformwerkzeug mit angeordneter Formleiste,
- Figur 12: eine Ansicht von schräg seitlich vorne oben auf eine Formleiste,
- Figur 13: eine Ansicht von schräg seitlich vorne oben auf die Formleiste gemäß Figur 12,
- Figur 14: eine Ansicht von schräg seitlich vorne oben auf eine Formleiste mit daran vorhandener Schubleiste und daran angeordnetem Isolator,
- Figur 15: eine Ansicht von schräg seitlich unten auf ein Formwerkzeug mit daran angeordneter Formleiste und Isolator, wobei Teile des Formwerkzeugs ausgeblendet sind,
- Figur 16: das Formwerkzeug gemäß Figur 15, wobei der Isolator in Schubrichtung des Isolators entlang des Formwerkzeugs weiterbewegt vorhanden ist, sodass ein Ende einer ersten Seite des Isolators umgebogen vorhanden ist,
- Figur 17: eine weitere Ansicht von schräg seitlich unten auf das Formwerkzeug mit daran angeordneter Formleiste und Isolator, wobei Teile des Formwerkzeugs ausgeblendet sind, wobei der Isolator relativ zur Position gemäß Figur 16 in Schubrichtung des Isolators weiterbewegt vorhanden ist, sodass das Ende der ersten Seite des Isolators an einer Federorganaußenseite der Formleiste ansteht,
- Figur 18: eine weitere Ansicht von schräg seitlich unten auf das Formwerkzeug mit daran angeordneter Formleiste und Isolator, wobei Teile des Formwerkzeugs ausgeblendet sind, wobei der Isolator relativ zur Position gemäß Figur 17 in Schubrichtung des Isolators weiterbewegt vorhanden ist, sodass ein Ende einer zweiten Seite des Isolators an einem zweiten Umlenkelement der Formleiste ansteht,
- Figur 19: eine weitere Ansicht von schräg seitlich unten auf das Formwerkzeug mit daran angeordneter Formleiste und Isolator, wobei Teile des Formwerkzeugs ausgeblendet sind, wobei der Isolator in Schubrichtung des Isolators weiterbewegt vorhanden ist, sodass Enden der ersten und die zweiten Seite des Isolators umgebogen vorhanden sind,
- Figur 20: eine perspektivische Ansicht von schräg seitlich vorne auf eine Schubleiste mit daran angeordnetem Isolator,
- Figur 21: eine perspektivische Ansicht von schräg seitlich oben auf einen Ausschnitt der Schubleiste gemäß Figur 20 mit daran angeordnetem Isolator,
- Figur 22: ein perspektivischer Ausschnitt von schräg seitlich oben auf einen Ausstoßer,
- Figur 23: eine perspektivische Ansicht von schräg seitlich unten auf ein Übertragungsmagazin eines Übertragungswerkzeugs und

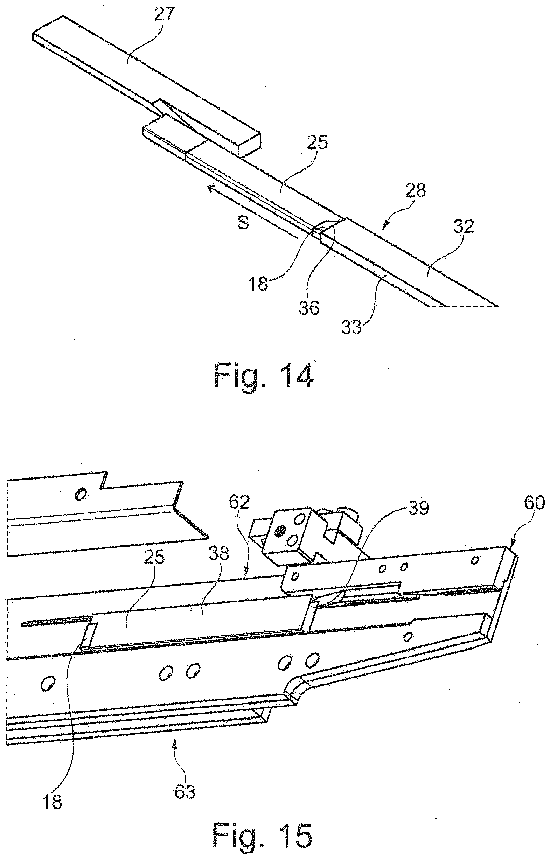

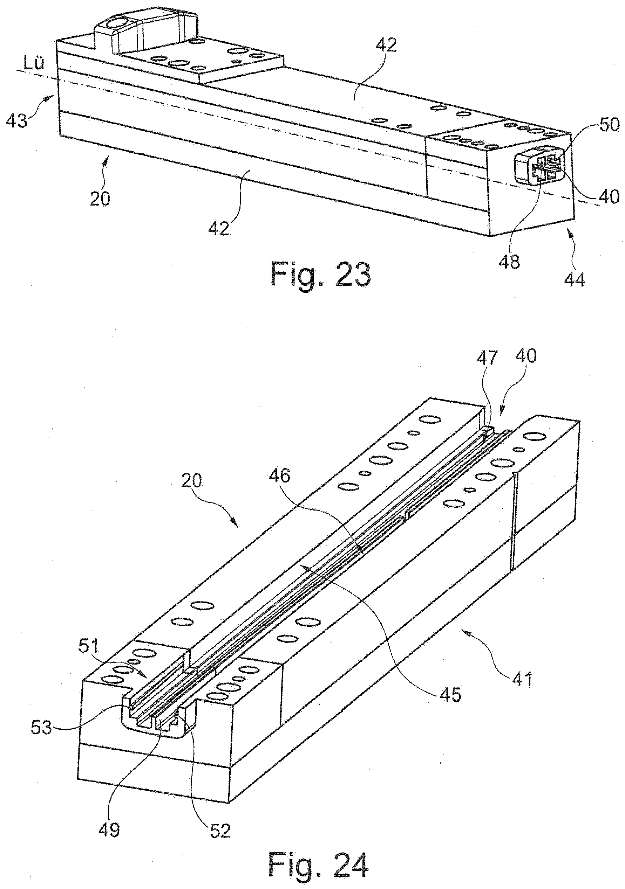

- Figur 14: eine perspektivische Ansicht von schräg seitlich unten auf eine Hälfte des Übertragungsmagazins gemäß Figur 23.

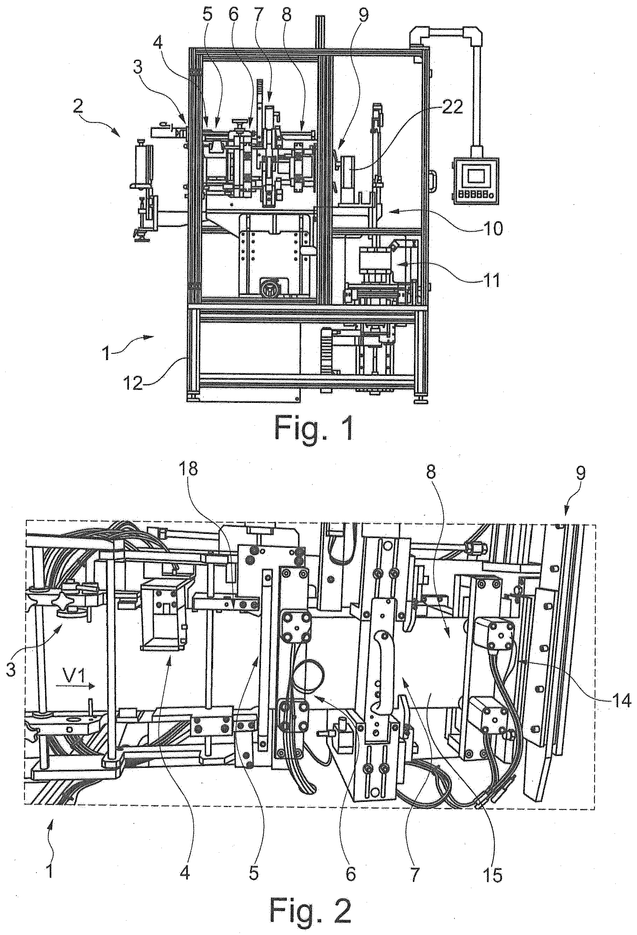

In Figur 1 ist eine Draufsicht auf eine Maschine 1 gezeigt. An der Maschine 1 ist ein Materialmagazin 2, eine erste Prägevorrichtung 3, eine Stanzvorrichtung 4, eine Bördelvorrichtung 5, eine erste Transportvorrichtung 6, eine zweite Prägevorrichtung 7, eine zweite Transportvorrichtung 8, eine Umformvorrichtung 9, ein Übertragungswerkzeug 10 und ein Stator 11 an einem Gestell 12 der Maschine 1 angeordnet.

Im Folgenden werden für gleiche Elemente, welche ggf. unterschiedlich ausgeführt sind, zur leichteren Verständlichkeit die gleichen Bezugszeichen verwendet.

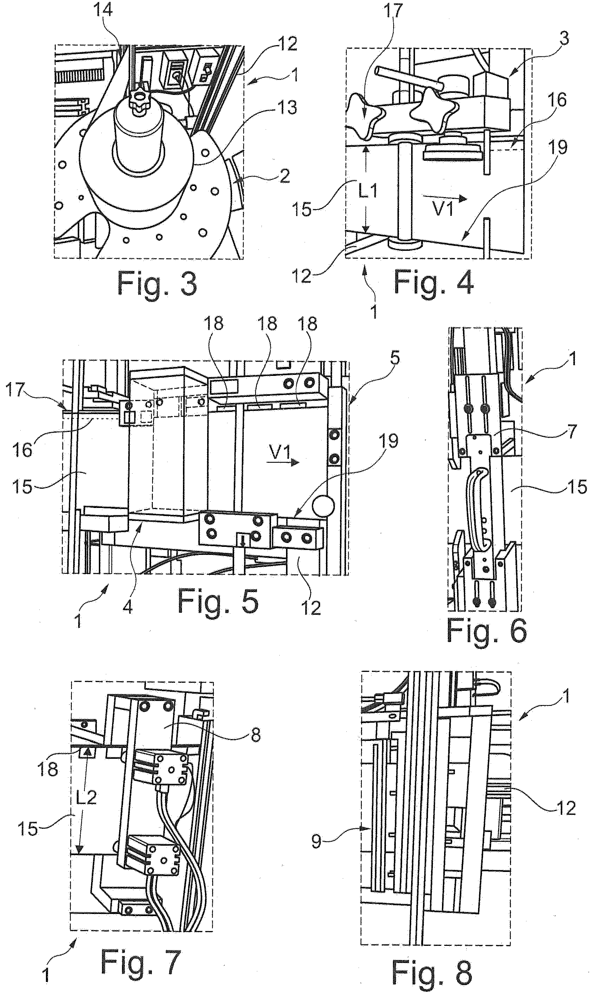

In Figur 3 ist das Materialmagazin 2 mit daran angeordneter Isolatormaterialrolle 13 gezeigt. Ein Ende 14 des Isolatormaterials 15 der Isolatormaterialrolle 13 ist durch die Maschine 1, an den einzelnen Vorrichtungen der Maschine 1 vorbei, gefädelt und endet an der Umformvorrichtung 9 (siehe auch Figur 2). Die Isolatormaterialrolle 13 ist am Materialmagazin drehbeweglich gelagert.

In Figur 4 ist die erste Prägevorrichtung 3 gezeigt. Mittels der Prägevorrichtung 3 wird in das Isolatormaterial 15 eine Quersickung 16 im Bereich einer Außenkante 17 des Isolatormaterials 15 eingebracht. Beispielsweise ist die Quersickung 16 als eine Solllinie zu sehen. Hierdurch ist das Isolatormaterial 15 im Bereich der Quersickung 16 um die Quersickung 16 vergleichsweise einfach umklappbar bzw. knickbar vorhanden.

In Figur 5 ist die Stanzvorrichtung 4 gezeigt, welche einen Bereich der Außenkante 17 des Isolatormaterials 15 abschnittsweise bis zur Quersickung 16 entfernt, sodass Fahnen 18 im Bereich der Außenkante 17 des Isolatormaterials 15 stehen bleiben. Die Fahnen 18 werden mit der Bördelvorrichtung 5 entlang der Quersickung 16 als Knickkante umgebogen, sodass eine Länge L2 des Isolatormaterials 15 nach dem Umbiegen sich von einer zweiten Außenkante 19 bis zur Quersickung 16 erstreckt. Beispielsweise weißt das Isolatormaterial 15 im aufgewickelten Zustand auf der Isolatormaterialrolle eine Länge L1 auf, wobei L1 größer ist als L2.

In Figur 6 ist die zweite Prägevorrichtung 7 gezeigt. Mittels der zweiten Prägevorrichtung 7 werden Längssickungen in das Isolatormaterial 15 eingebracht. Beispielsweise erstrecken sich die Längssickungen entlang einer Längenerstreckung des Isolatormaterials 15.

In Figur 7 ist die zweite Transportvorrichtung 8 gezeigt. Mittels der zweiten Transportvorrichtung 8 wird das Isolatormaterial 15 entlang einer Vorschubrichtung V1 des Isolatormaterials 15 von der Isolatormaterialrolle 13 abgewickelt und durch die Maschine 1 bis zur Umformvorrichtung 9 transportiert.

In Figur 8 ist die Umformvorrichtung 9 gezeigt. Mittels der Umformvorrichtung 9 wird Bereich des Endes 14 des Isolatormaterials 15 vom verbleibenden Isolatormaterial 15 abgetrennt. Beispielsweise wird gleichzeitig das abgetrennte Isolatormaterial - der Isolator, entlang der mittels der zweiten Prägevorrichtung 7 eingebrachten Längssickungen, umgebogen (in Figur 8 nicht gezeigt).

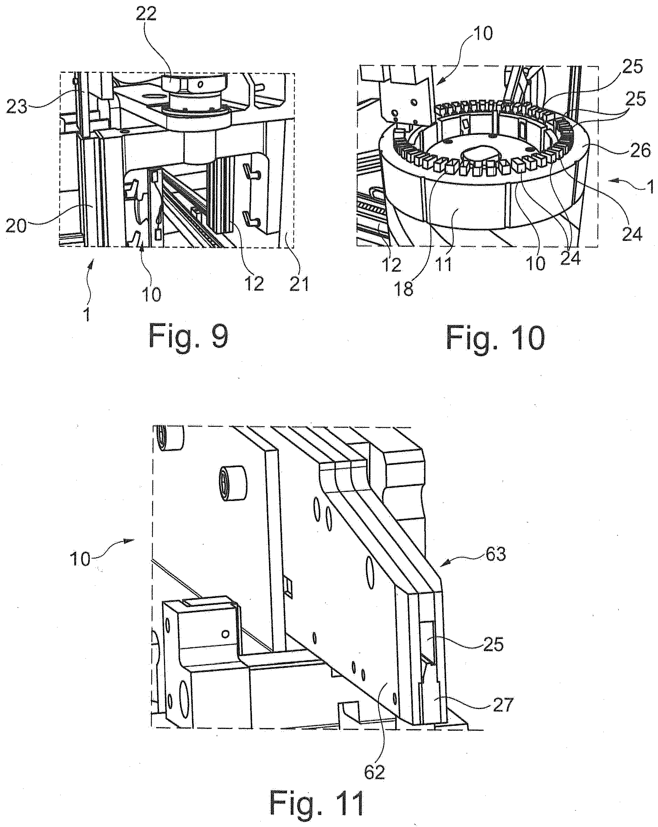

In Figur 9 ist das Übertragungswerkzeug 10 gezeigt. Beispielsweise sind am Übertragungswerkzeug 10 zwei Übertragungsmagazine 20, 21 angeordnet. Beispielsweise sind die Übertragungsmagazine 20, 21 mittels eines Motors 22 des Übertragungswerkzeugs 10 drehbeweglich vorhanden. Beispielsweise ist ein Isolator von der Umformvorrichtung 9, welche ein Formwerkzeug 23 aufweist, in ein Übertragungsmagazin 20, 21 bewegbar. Beispielsweise sind die beiden Übertragungsmagazine 20, 21 identisch ausgebildet.

Das Übertragungsmagazin 20 weist einen Hohlraum 40 auf (siehe Figuren 23, 24). Beispielsweise ist das Übertragungsmagazin 20 aus zumindest zwei Übertragungsmagazinteilen 41, 42 zusammengesetzt vorhanden. Hierdurch ist eine Herstellung des Übertragungsmagazins 20 vereinfacht. Denkbar ist auch, dass das Übertragungsmagazin 20 aus mehr als zwei Übertragungsmagazinteilen 41, 42 besteht. Vorstellbar ist im Gegensatz dazu aber auch, dass das Übertragungsmagazin 20 einstückig ausgebildet ist. Denkbar ist beispielsweise, dass das Übertragungsmagazin mittels einem 3D-Druckverfahren hergestellt ist.

Beispielsweise verjüngt sich der Hohlraum 40 des Übertragungsmagazins 20 entlang seiner Längsachse LÜ von einer ersten Stirnseite 43 bis zu einer zweiten Stirnseite 44 konisch zulaufend. Beispielsweise sind die erste und die zweite Stirnseite 43, 44 sich gegenüberliegend und voneinander beabstandet vorhanden. Vorstellbar ist, dass der Hohlraum 40 an der ersten und der zweiten Stirnseite 43, 44 offen ausgebildet ist, sodass ein Isolator 25 entlang der Längsachse LÜ des Übertragungsmagazins 20 an der ersten Stirnseite 43 in den Hohlraum 40 einschiebbar ist und an der zweiten Stirnseite 44 aus dem Hohlraum 40 herausbewegbar ist.

Beispielsweise weist der Hohlraum 40 des Übertragungsmagazins 20 eine erste und eine zweite schmale Hohlrauminnenseiten 45, 46 und eine erste und eine zweite breite Hohlrauminnenseiten 47, 48 auf. Vorstellbar ist weiter, dass an jeder der zwei breiten Hohlrauminnenseiten 47, 48 jeweils ein Federelement 49, 50 ausgebildet ist, welches von der breiten Hohlrauminnenseite 47, 48 absteht. Beispielsweise verläuft jedes der an den breiten Hohlrauminnenseiten 47, 48 vorhandenen Federelemente 49, 50 von der ersten Stirnseite bis zur zweiten Stirnseite 43, 44 des Hohlraums 40 durchgehend. Denkbar ist auch, dass die Federelement 49, 50 voneinander beabstandet und sich gegenüberliegend ausgebildet sind. Vorstellbar ist weiter, dass die Federelemente 49, 50 entlang der Längsachse LU des Übertragungsmagazins 20 von der ersten zur zweiten Stirnseite 43, 44 konisch aufeinander zulaufend vorhanden sind.

Beispielsweise ist an einem Endabschnitt 51 des Hohlraums 40 im Bereich der zweiten Stirnseite 44 an den schmalen Hohlrauminnenseiten 45, 46 jeweils ein weiteres Federelement 52, 53 ausgebildet. Denkbar ist, dass die Federelement 52, 53 voneinander beabstandet und sich gegenüberliegend ausgebildet sind. Vorstellbar ist weiter, dass die Federelemente 52, 53 entlang der Längsachse LU des Übertragungsmagazins 20 in Richtung zweiten Stirnseite 44 konisch aufeinander zulaufend vorhanden sind.

In Figur 10 ist der Stator 11 gezeigt. Beispielsweise umfasst der Stator 11 mehrere Statornuten 24. Zum Beispiel sind durch das Übertragungswerkzeug 10 Isolatoren 25 in die Statornuten 24 einsetzbar. In Figur 10 ist beispielhaft ein teilweise mit Isolatoren 25 vorhandener Stator 11 gezeigt.

Beispielsweise steht im vollständig eingesetzten Zustand der Isolatoren 25 in den Statornuten 24 jeder Isolator 25 mit seiner Fahne 18 an einer Außenseite 26 des Stators 11 an.

In Figur 14 ist schematisch eine Anordnung einer Formleiste 27 und einer Schubleiste 28 mit daran angeordnetem Isolator 25 gezeigt. In Figur 14 ist ein Beginn eines Vorbeibewegens des Isolators 25 an der Formleiste 27 gezeigt. Erfindungsgemäß wird der Isolator 25 mittels der Schubleiste 28 in Schubrichtung S des Isolators 25 an der Formleiste 27 vorbeibewegt.

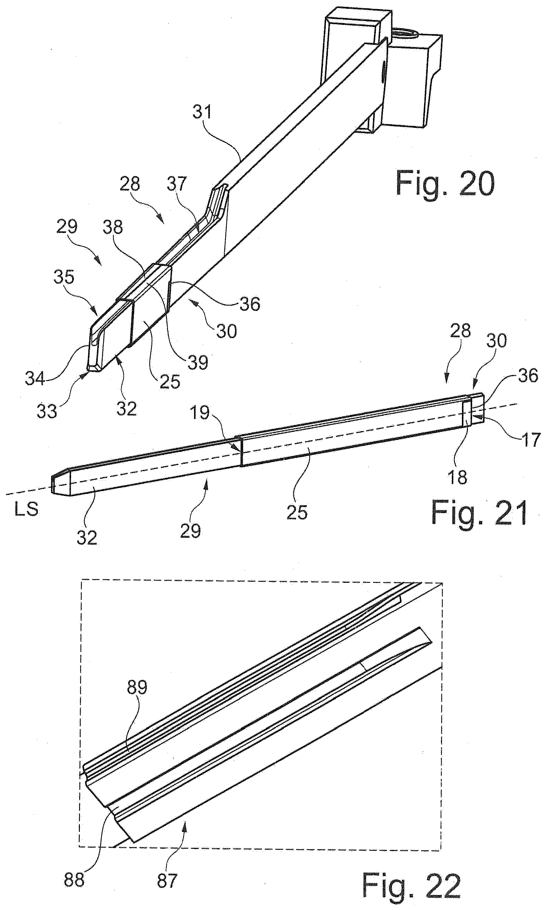

Erfindungsgemäß umfasst die Schubleiste 28 ein erstes Ende 29 und ein zweites Ende 30 (siehe auch Figuren 20 und 21). Beispielsweise ist die Schubleiste 28 am zweiten Ende 30 mit einem Verlängerungselement 31 verbunden. Beispielsweise ist ein Abstand von Schubleistenaußenseiten 32 bis 35 am ersten Ende 29 kleiner, als ein Abstand der Schubleistenaußenseiten 32 bis 35 am zweiten Ende 30. Erfindungsgemäß ist am Übergang des ersten zum zweiten Ende 29, 30 ein Anschlag 36 an der Schubleiste 28 ausgebildet. Erfindungsgemäß stößt der Isolator 25 im angeordneten Zustand mit der Außenkante 17 am Anschlag 36 an. Hierdurch kann der Isolator 25 mittels der Schubleiste 28 in Schubrichtung S des Isolators entlang einer Längsachse LS der Schubleiste 28 bewegt werden.

Denkbar ist, dass die Schubleiste an der schmalen Außenseite 35 eine Vertiefung 37 aufweist. Beispielsweise sind während des Umformvorgangs mittels der Formleiste 27 Enden 38, 39 des Isolators 25 in die Vertiefungen 37 hineinbewegbar.

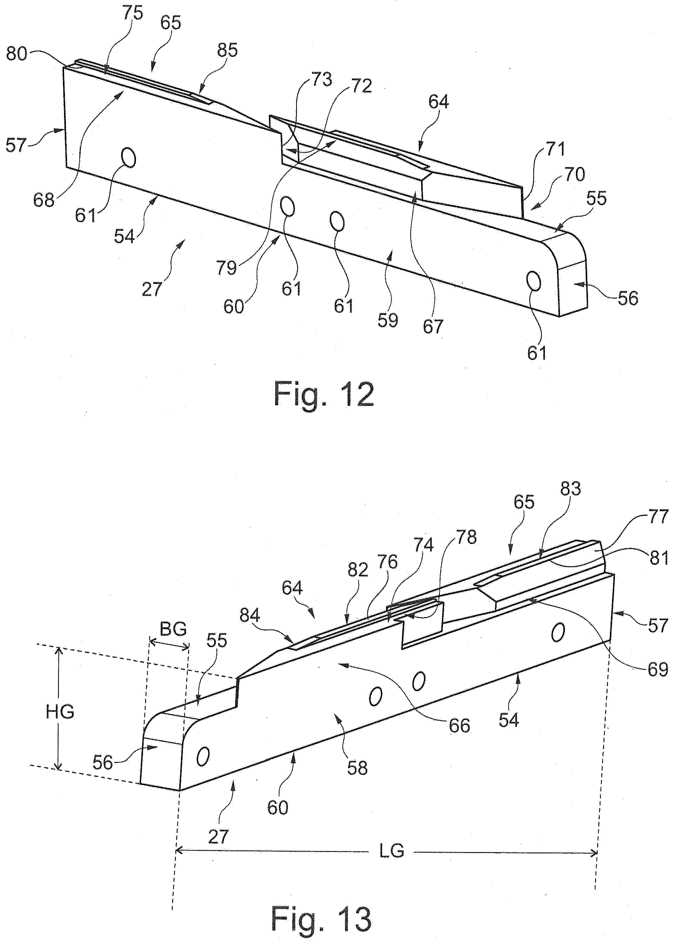

In den Figuren 12 und 13 ist die Formleiste 27 gezeigt. Die Formleiste 27 weist einen Grundkörper 54 auf. Beispielsweise umfasst der Grundkörper 54 eine Oberseite 55, eine erste und eine zweite Stirnseite 56, 57, eine erste und eine zweite Seitenfläche 58, 59 und eine Unterseite 60. Vorstellbar ist auch, dass am Grundkörper 54 Befestigungselemente 61 vorhanden sind, um die Formleiste an einer Aufnahme 62 eines Formwerkzeugs 63 zu befestigen. Vorstellbar ist, dass der Grundkörper sich in eine Länge LG, eine Höhe HG und eine Breite BG erstreckt.

Beispielsweise ist das Formwerkzeug 63 Teil des Übertragungswerkzeugs 10.

An der Oberseite 55 des Grundkörpers 54 weist die Formleiste 27 ein erstes und ein zweites Umlenkelement 64, 65 auf. Sowohl das erste als auch das zweite Umlenkelement 64, 65 sind mit einer Unterseite der Umlenkelemente 64, 65 an der Oberseite 55 anliegend. Denkbar ist, dass das erste und das und das zweite Umlenkelement 64, 65 einstückig mit dem Grundkörper 54 vorhanden sind. Jedes der Umlenkelement 64, 65 umfasst eine erste und eine zweite Außenseite 66 bis 69. Erfindungsgemäß laufen die erste Außenseite 66 und die zweite Außenseite 67 des ersten Umlenkelements 64 an einer Vorderseite 70 des ersten Umlenkelements 64 aufeinander zu, sodass das erste Umlenkelement 64 an der Vorderseite 70 eine Kante 71 aufweist. Erfindungsgemäß laufen die erste Außenseite 68 und die zweite Außenseite 69 des zweiten Umlenkelements 65 an einer Vorderseite 72 des zweiten Umlenkelements 65 aufeinander zu, sodass das zweite Umlenkelement 65 an der Vorderseite 72 eine Kante 73 aufweist.

Beispielsweise weist das erste Umlenkelement 64 eine Oberseite 74 auf. Denkbar ist, dass das zweite Umlenkelement 65 eine Oberseite 75 aufweist.

Zum Beispiel ist an der Oberseite 74 des ersten Umlenkelements 64 ein erstes Federorgan 76 ausgebildet. Zum Beispiel ist an der Oberseite 75 des ersten Umlenkelements 65 ein zweites Federorgan 77 ausgebildet. Beispielsweise sind die Federorgane 76, 77 einstückig mit dem Grundkörper 54 des Formleiste 27 vorhanden.

Beispielsweise weist das erste Federorgan 76 eine erste und eine zweite Federorganaußenseite 78, 79 auf. Beispielsweise weist das zweite Federorgan 77 eine erste und eine zweite

Federorganaußenseite 80, 81 auf. Vorstellbar ist außerdem, dass das erste Federorgan 76 eine erste Federorganoberseite 82 und das zweite Federorgan 77 eine zweite Federorganoberseite 83 aufweist. Beispielsweise ist eine Federorganvorderseite 84 des ersten Federorgans 76 von der Oberseite 74 weg verlaufend, abstehend vorhanden. Beispielsweise ist eine Federorganvorderseite 85 des zweiten Federorgans 77 von der Oberseite 75 weg verlaufend, abstehend vorhanden.

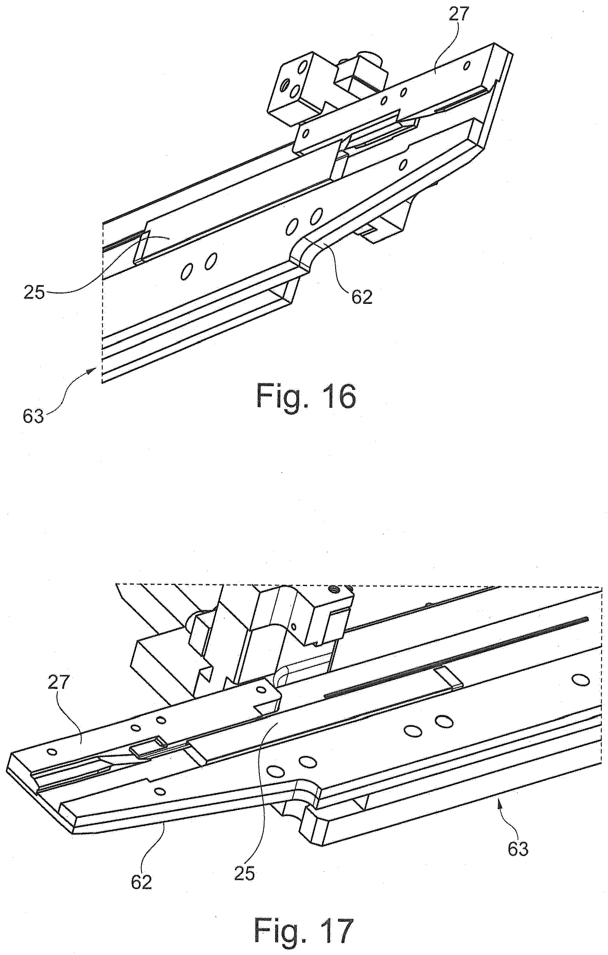

In den Figuren 16 bis 19 und 11 ist der Ablauf einer Bewegung des Isolators 25 entlang der Formleiste 27 gezeigt. In den Figuren 16 bis 19 ist das Formwerkzeug 63, insbesondere eine Aufnahme 62 des Formwerkzeugs 63 teilweise abgebildet. Ebenfalls ist in den Figuren 16 bis 19 die Schubleiste, welche den Isolator 25 entlang der Formleiste 27 bewegt, nicht dargestellt. Beispielsweise ist an der Aufnahme 62 eine Führung in Form eines Führungsstegs 86 vorhanden.

In einem ersten Schritt wird der Isolator 25 an die Formleiste heranbewegt, sodass der Isolator 25 mit dem ersten Ende 38 am ersten Umlenkelement 64 an der zweiten Außenseite 67 ansteht und durch diese entlang einer Solllinie - einer Längssickung -, nach Innen in Richtung des zweiten Endes 39 zu, gebogen wird (Figur 16). Hierbei liegt das erste Ende 38 an der Oberseite 74 an und steht mit einer Außenkante an der ersten Federorganaußenseite 78 des ersten Federorgans 76 an. Beispielsweise wird das erste Ende 38 durch die erste Federorganaußenseite 47 vom zweiten Ende 39 weg gebogen (Figur 17).

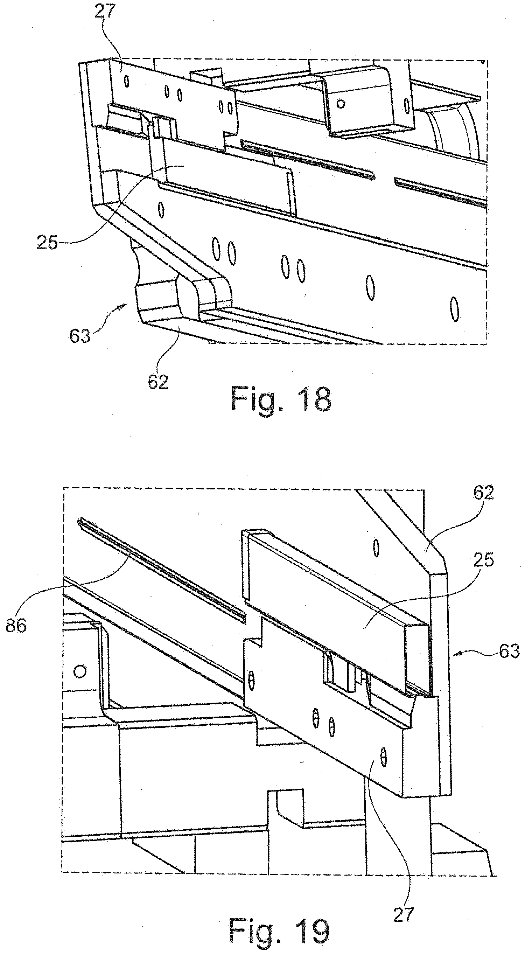

In einem nächsten Schritt wird der Isolator 25 mit dem zweiten Ende 39 an das zweiten Umlenkelement 65 heranbewegt, sodass das zweite Ende 39 an der zweiten Außenseite 69 ansteht und durch diese entlang einer Solllinie - einer Längssickung -, nach Innen in Richtung des erstes Endes 38 zu, gebogen wird (Figur 18). Hierbei liegt das zweite Ende 39 an der Oberseite 75 an und steht mit einer Außenkante an der ersten Federorganaußenseite 80 des zweiten Federorgans 77 an. Beispielsweise wird das zweite Ende 39 durch die erste Federorganaußenseite 80 vom ersten Ende 38 weg gebogen (Figur 19). Hierdurch sind die Außenkanten des ersten und des zweiten Endes 38, 39 über eine Breite des ersten und/oder des zweiten Federorgans 76, 77 voneinander beabstandet. Ebenfalls ist hierdurch ein Verkanten des Isolators 25 während des Formvorgangs an der Formleiste 27 verhindert.

In Figur 22 ist ein Ausstoßer 87 gezeigt. Beispielsweise umfasst der Ausstoßer 87 Ausnehmungen 88, 89, in welche die Federelemente 49, 50, 52, 53 des Übertragungsmagazins 20 eingreifen können.

### Bezugszeichenliste

| | | | |
|---|---|---|---|
| 1 | Maschine | 39 | Ende |
| 2 | Materialmagazin | 40 | Hohlraum |
| 3 | Prägevorrichtung | 41, 42 | Übertragungsmagazinteil |
| 4 | Stanzvorrichtung | | |
| 5 | Bördelvorrichtung | 43, 44 | Stirnseite |
| 6 | Transportvorrichtung | 45-48 | Hohlrauminnenseite |
| 7 | Prägevorrichtung | 49, 50 | Federelement |
| 8 | Transportvorrichtung | 51 | Endabschnitt |
| 9 | Umformvorrichtung | 52, 53 | Federelement |
| 10 | Übertragungswerkzeug | 54 | Grundkörper |
| 11 | Stator | 55 | Oberseite |
| 12 | Gestell | 56, 57 | Stirnseite |
| 13 | Isolatormaterialrolle | 58, 59 | Seitenfläche |
| | | 60 | Unterseite |
| 14 | Ende | 61 | Befestigungselement |
| 15 | Isolatormaterial | 62 | Aufnahme |
| 16 | Quersickung | 63 | Formwerkzeug |
| 17 | Außenkante | 64, 65 | Umlenkelement |
| 18 | Fahne | 66-69 | Außenseite |
| 19 | Außenkante | 70, 72 | Vorderseite |
| 20, 21 | Übertragungsmagazin | 71, 73 | Kante |
| 22 | Motor | 74, 75 | Oberseite |
| 23 | Formwerkzeug | 76, 77 | Federorgan |
| 24 | Statornut | 78-81 | Federorganaußenseite |
| 25 | Isolator | 82, 83 | Federorganoberseite |
| 26 | Außenseite | 84, 85 | Federorganvorderseite |
| 27 | Formleiste | | |
| 28 | Schubleiste | 86 | Führungssteg |
| 29, 30 | Ende | 87 | Ausstoßer |
| 31 | Verlängerungselement | 88, 89 | Ausnehmung |
| 32-35 | Schubleistenaußenseite | | |
| 36 | Anschlag | | |
| 37 | Vertiefung | | |
| 38 | Ende | | |

## Patentansprüche

1. Formwerkzeug (63) mit einer Formleiste (27) zur Umformung eines Isolators (25), **dadurch gekennzeichnet, dass** das Formwerkzeug (63) eine Schubleiste (28) aufweist, wobei die Schubleiste (28) quaderförmig ausgebildet ist und sich entlang einer Längsachse erstreckt, wobei an einem ersten Ende (29) der Schubleiste (28) Schubleistenaußenseiten (32 - 35) der Schubleiste (28), welche sich entlang der Längsachse erstrecken, nach Innen versetzt vorhanden sind, sodass der Isolator (25) über die nach Innen versetzten Schubleistenaußenseiten (32 - 35) geschoben werden kann, wobei der Isolator (25) anliegend an den nach Innen versetzten Schubleistenaußenseiten (32 - 35) angeordnet werden kann, wobei im Übergang der nach Innen versetzten Schubleistenaußenseiten (32 - 35) zu den verbleibenden Schubleistenaußenseiten (32 - 35) an einem zweiten Ende (30) der Schubleiste (28) ein Anschlag (36) ausgebildet ist, an welchem der Isolator (25) im angeordneten Zustand mit einer Stirnseite (17) des Isolators (25) ansteht, sodass der Isolator (25) mit der Schubleiste (28) entlang der Formleiste (27) in Schubrichtung des Isolators (25) und in Richtung Erstreckung der Längsachse der Schubleiste (28) bewegbar ist, um den Isolator (25) durch die Formleiste (27) umzuformen, wobei die Formleiste (27) einen quaderförmigen Grundkörper (54) aufweist, wobei der Grundkörper (54) eine Oberseite (55) aufweist, wobei die Formleiste (27) ein erstes und ein zweites Umlenkelement (64, 65) aufweist, wobei das erste und das zweite Umlenkelement (64, 65) an der Oberseite (55) des Grundkörpers (54) von der Oberseite (55) des Grundkörpers (54) abstehend vorhanden sind, wobei das erste Umlenkelement (64) mit einer Unterseite des ersten Umlenkelements (64) mit der Oberseite (55) des Grundkörpers (54) verbunden ist, wobei das zweite Umlenkelement (65) mit einer Unterseite des zweiten Umlenkelements (65) mit der Oberseite (55) des Grundkörpers (54) verbunden ist, wobei das zweite Umlenkelement (65) versetzt zum ersten Umlenkelement (64) am Grundkörper (54) ausgebildet ist, wobei das erste Umlenkelement (64) eine erste Außenseite (66) aufweist, wobei das erste Umlenkelement (64) eine zweite Außenseite (67) aufweist, wobei die zweite Außenseite (67) des ersten Umlenkelements (64) gegenüberliegend zur ersten Außenseite (66) des ersten Umlenkelements (64) vorhanden ist, wobei die erste und die zweite Außenseite (66, 67) des ersten Umlenkelements (64) an einer Vorderseite (70) des ersten Umlenkelements (64) aufeinander zulaufen, sodass das erste Umlenkelement (64) an der Vorderseite (70) des ersten Umlenkelements (64) eine Kante (71) aufweist, wobei die zweite Außenseite (67) des ersten Umlenkelements (64) ausgehend von der Vorderseite (70) des ersten Umlenkelements (64) in Schubrichtung des Isolators (25) gesehen sich von der ersten Außenseite (66) des ersten Umlenkelements (64) weg erstreckt, sodass das erste Umlenkelement (64) ausgehend von der Vorderseite (70) des ersten Umlenkelements (64) sich verbreitert, wobei das zweite Umlenkelement (65) eine erste Außenseite (68) aufweist, wobei das zweite Umlenkelement (65) eine zweite Außenseite (69) aufweist, wobei die zweite Außenseite (69) des zweiten Umlenkelements (65) gegenüberliegend zur ersten Außenseite (68) des zweiten Umlenkelements (65) vorhanden ist, wobei die erste und die zweite Außenseite (68, 69) des zweiten Umlenkelements (65) an einer Vorderseite (72) des zweiten Umlenkelements (65) aufeinander zulaufen, sodass das zweite Umlenkelement (65) an der Vorderseite (72) des zweiten Umlenkelements (65) eine Kante (73) aufweist, wobei die zweite Außenseite (69) des zweiten Umlenkelements (65) ausgehend von der Vorderseite (72) des zweiten Umlenkelements (65) in Schubrichtung des Isolators (25) gesehen sich von der ersten Außenseite (68) des zweiten Umlenkelements (65) weg erstreckt, sodass das zweite Umlenkelement (65) ausgehend von der Vorderseite (72) des zweiten Umlenkelements (65) in Schubrichtung gesehen sich verbreitert, wobei die Formleiste (27) derart vorhanden ist, dass in einem Umformvorgang des Isolators (25), bei welchem der Isolator (25) in Schubrichtung über das erste und das zweite Umlenkelement (64, 65) geschoben wird, zunächst ein Ende (39) einer ersten Seite des Isolators (25) entlang der zweiten Außenseite (67) des ersten Umlenkelements (64) in Schubrichtung geschoben wird, wobei das erste Umlenkelement (64) hierbei die erste Seite des Isolators (25) an einer ersten Solllinie des Isolators (25) umknickt und anschließend ein Ende (38) einer zweiten Seite des Isolators (25) entlang der zweiten Außenseite (69) des zweiten Umlenkelements (65) in Schubrichtung geschoben wird, wobei das zweite Umlenkelement (65) hierbei die zweite Seite an einer zweiten Solllinie des Isolators (25) umknickt.

2. Formwerkzeug (63) nach dem vorangegangen Anspruch 1, **dadurch gekennzeichnet, dass** das erste Umlenkelement (64) an einer Oberseite (74) des ersten Umlenkelements (64) ein erstes Federorgan (76) aufweist, welches von der Oberseite (74) des ersten Umlenkelements (64) abstehend vorhanden ist, wobei das erste Federorgan (76) am ersten Umlenkelement (64) sich in Schubrichtung des Isolators (25) erstreckt, wobei eine Vorderseite (84) des ersten Federorgans (76) beabstandet zur Kante (71) des ersten Umlenkelements (64) vorhanden ist, wobei eine Federorganoberseite (82) des ersten Federorgans (76) in Schubrichtung gesehen ausgehend von der Oberseite (74) des ersten Umlenkelements (64) von der Oberseite (74) des ersten Umlenkelements (64) weg verläuft, sodass beim Umformvorgang des Isolators (25) eine Außenkante des umgeknickten Endes (39) der ersten Seite des Isolators (25) an einer ersten Federorganaußenseite (78) des ersten Federorgans (76) anliegt.

3. Formwerkzeug (63) nach einem der vorangegangenen Ansprüche, **dadurch gekennzeichnet, dass** die Formleiste (27) ein Befestigungselement (61) am Grundkörper (54) aufweist, um die Formleiste (27) an einem Formwerkzeug (63) festzulegen.

4. Formwerkzeug (63) nach einem der vorangegangenen Ansprüche, **dadurch gekennzeichnet, dass** die Schubleiste (28) sich in eine Länge, in eine Breite und in eine Höhe erstreckt, wobei die Länge größer ist als die Höhe und die Höhe größer ist als die Breite, wobei die Schubleiste (28) zwei große Schubleistenaußenseiten aufweist, welche sich in die Höhe und in die Länge erstrecken, wobei die Schubleiste (28) eine erste und eine zweite kleine Schubleistenaußenseite aufweist, welche sich in die Breite und in die Länge erstrecken, wobei eine erste kleine Schubleistenaußenseite am ersten Ende eine Vertiefung (37) aufweist, welche sich entlang einer Längsachse der Schubleiste (28) erstreckt, sodass beim Umformvorgang des Isolators (25) die umgeknickten Enden (38, 39) der ersten und der zweiten Seite des Isolators (25) in die Vertiefung (37) eingreifen können.

5. Übertragungswerkzeug (10) mit einem Formwerkzeug (63) nach einem der vorangegangenen Ansprüche, **dadurch gekennzeichnet, dass** das Übertragungswerkzeug (10) ein Übertragungsmagazin (20, 21) aufweist, wobei das Übertragungsmagazin (20, 21) sich in eine Längsrichtung erstreckt, wobei das Übertragungsmagazin (20, 21) einen Hohlraum (40) aufweist, in welchen der Isolator (25) mittels der Schubleiste (28) in Längsrichtung des Übertragungsmagazins (20, 21) einführbar ist, wobei der Hohlraum (40) in Längsrichtung konisch zulaufend ausgebildet ist.

6. Übertragungswerkzeug (10) nach dem vorangegangenen Anspruch 5, **dadurch gekennzeichnet, dass** der Hohlraum (40) des Übertragungsmagazins (20, 21) eine erste und eine zweite schmale Hohlraumseite (45, 46) aufweist, wobei der Hohlraum (40) eine erste und eine zweite breite Hohlraumseite (47, 48) aufweist, wobei an einer ersten Innenseite der ersten breiten Hohlraumseite (47) des Hohlraums (40) ein erstes Federelement (49) abstehend von der ersten Innenseite vorhanden ist, wobei sich das erste Federelement (49) über die Längserstreckung des Hohlraums (40) erstreckt, sodass beim Einschubvorgang des Isolators (25) in den Hohlraum (40) eine erste Seite des Isolators (25) durch das erste Federelement (49) in ein Hohlrauminneres verformt wird.

7. Übertragungswerkzeug (10) nach einem der vorangegangenen Ansprüche 5 oder 6, **dadurch gekennzeichnet, dass** an einem Endabschnitt des Hohlraums (40) an der ersten schmalen Hohlraumseite (45) ein drittes Federelement (53) abstehend von einer Innenseite der ersten schmalen Hohlraumseite (45) vorhanden ist, wobei am Endabschnitt (51) des Hohlraums (40) an der zweiten schmalen Hohlraumseite (46) ein viertes Federelement (52) abstehend von einer Innenseite der zweiten schmalen Hohlraumseite (46) vorhanden ist, wobei das dritte und das vierte Federelement (52, 53) sich in Längserstreckung des Hohlraums (40) erstrecken, sodass eine dritte Seite des Isolators (25) durch das dritte Federelement (52) in das Hohlrauminnere verformt wird und eine vierte Seite des Isolators (25) durch das vierte Federelement (53) in das Hohlrauminnere verformt wird.

8. Maschine (1) zur Herstellung eines Isolators (25), mit einem Übertragungswerkzeug (10) nach einem der vorangegangenen Ansprüche 5 bis 7 oder mit einem Formwerkzeug (63) nach einem der vorangegangenen Ansprüche 1 bis 4.

9. Maschine (1) nach dem vorangegangenen Anspruch 8, **dadurch gekennzeichnet, dass** die Maschine (1) ein Materialmagazin (2), eine Prägevorrichtung (3, 7), eine Stanzvorrichtung (4), eine Bördelvorrichtung (5), eine Transportvorrichtung (6, 8) und/oder eine Umformvorrichtung (9) ausweist.

10. Herstellungsverfahren zur Herstellung eines Isolators (25) unter Verwendung eines Übertragungswerkzeugs (10) nach einem der vorangegangenen Ansprüche 5 bis 7 oder unter Verwendung eines Formwerkzeugs (63) nach einem der vorangegangen genannten Ansprüche 1 oder 4 und/oder unter Verwendung einer Maschine (1) nach einem der vorangegangen genannten Ansprüchen 8 oder 9,
wobei das Herstellungsverfahren folgende Verfahrensschritte umfasst:
- Abwickeln von Isolatormaterial (15) von einer Isolatormaterialrolle (13) in eine Vorschubrichtung, wobei die Isolatormaterialrolle (13) beweglich in einem Materialmagazin (2) gehalten ist,
- Prägen einer ersten Sickung (16) entlang der Vorschubrichtung in das abgewickelte Isolatormaterial (15) durch eine erste Prägevorrichtung (3),
- Ausstanzen von Material aus dem abgewickelten Isolatormaterial (15), sodass Isolatormaterial (15) im Bereich einer Außenkante (17) des Isolatormaterials (15) entfernt ist,
- Umklappen des nach dem Ausstanzvorgang verbliebenen Materials im Bereich der Außenkante (17) des Isolatormaterials (15) um die in Vorschubrichtung geprägte ersten Sickung (16),
- Prägen einer zweiten Sickung quer zur Vorschubrichtung in das Isolatormaterial (15) durch eine zweite Prägevorrichtung (7),
- Abschneiden eines Endes des abgewickelten Isolatormaterials (15) quer zur Vorschubrichtung, sodass ein Isolator (25) abgeschnitten ist,
- Umformen des Isolators (25) durch das Formwerkzeug (63)
- Einführen des umgeformten Isolators (25) in Schubrichtung des Isolators (25) in das Übertragungswerkzeug (10).

11. Herstellungsverfahren zur Herstellung eines Isolators (25) nach dem vorangegangenen Anspruch 10, **dadurch gekennzeichnet, dass** der Verfahrensschritt des Umformens des Isolators (25) durch das Formwerkzeug (63) folgende Verfahrensschritte aufweist:
- Umformen des Isolators (25) durch das Formwerkzeug (63), sodass der Isolator (25) U-förmig vorhanden ist,
- Aufschieben des Isolators (25) auf die Schubleiste (28), sodass der Isolator (25) am Anschlag (36) der Schubleiste (28) mit der Stirnseite (17) des Isolators (25) ansteht,
- Bewegen des Isolators (25) in Schubrichtung des Isolators (25) mit der Schubleiste (28), sodass der Isolator (25) entlang einer Oberseite der Formleiste (27) bewegt wird,
- Umformen eines Endes (39) der ersten Seite des Isolators (25) und eines Endes (38) der zweiten Seite des Isolators (25) durch das Formwerkzeug (63).

12. Isolator (25) hergestellt mit dem Herstellungsverfahren nach einem der vorangegangenen Ansprüche 10 oder 11.

## Claims

1. Shaping tool (63) having a shaping strip (27) for forming an insulator (25), **characterized in that** the shaping tool (63) has a thrust strip (28), wherein the thrust strip (28) is designed to be cuboid and extends along a longitudinal axis, wherein thrust strip external sides (32 - 35) of the thrust strip (28) that extend along the longitudinal axis are present on a first end (29) of the thrust strip (28) so as to be inwardly offset in such a way that the insulator (25) can be pushed over the inwardly offset thrust strip external sides (32 - 35), wherein the insulator (25) can be disposed so as to bear on the inwardly offset thrust strip external sides (32 - 35), wherein a detent (36), on which the insulator (25) rests by way of an end side (17) of the insulator (25) in the disposed state, is formed on a second end (30) of the thrust strip (28) in the transition from the inwardly offset thrust strip external sides (32 - 35) to the remaining thrust strip external sides (32 - 35) in such a way that the insulator (25) by way of the thrust strip (28) is movable along the shaping strip (27) in the thrust direction of the insulator (25) and in the direction of the extent of the longitudinal axis of the thrust strip (28) so as to form the insulator (25) by the shaping strip (27), wherein the shaping strip (27) has a cuboid main body (54), wherein the main body (54) has an upper side (55), wherein the shaping strip (27) has a first and a second deflection element (64, 65), wherein the first and the second deflection element (64, 65) are present on the upper side (55) of the main body (54) so as to project from the upper side (55) of the main body (54), wherein the first deflection element (64) by way of a lower side of the first deflection element (64) is connected to the upper side (55) of the main body (54), wherein the second deflection element (65) by way of a lower side of the second deflection element (65) is connected to the upper side (55) of the main body (54), wherein the second deflection element (65) is designed to be offset from the first deflection element (64) on the main body (54), wherein the first deflection element (64) has a first external side (66), wherein the first deflection element (64) has a second external side (67), wherein the second external side (67) of the first deflection element (64) is present so as to be opposite the first external side (66) of the first deflection element (64), wherein the first and the second external side (66, 67) of the first deflection element (64) converge on a front side (70) of the first deflection element (64) in such a way that the first deflection element (64) has an edge (71) on the front side (70) of the first deflection element (64), wherein the second external side (67) of the first deflection element (64), when viewed proceeding from the front side (70) of the first deflection element (64) in the thrust direction of the insulator (25), extends away from the first external side (66) of the first deflection element (64) in such a way that the first deflection element (64) widens proceeding from the front side (70) of the first deflection element (64), wherein the second deflection element (65) has a first external side (68), wherein the second deflection element (65) has a second external side (69), wherein the second external side (69) of the second deflection element (65) is present so as to be opposite the first external side (68) of the second deflection element (65), wherein the first and the second external side (68, 69) of the second deflection element (65) converge on a front side (72) of the second deflection element (65) in such a way that the second deflection element (65) has an edge (73) on the front side (72) of the second deflection element (65), wherein the second external side (69) of the second deflection element (65), when viewed proceeding from the front side (72) of the second deflection element (65) in the thrust direction of the insulator (25), extends away from the first external side (68) of the second deflection element (65) in such a way that the second deflection element (65) widens when viewed proceeding from the front side (72) of the second deflection element (65) in the thrust direction, wherein the shaping strip (27) is present in such a manner that in a forming procedure of the insulator (25), in which the insulator (25) is pushed in the thrust direction over the first and the second deflection element (64, 65), first one end (39) of a first side of the insulator (25) is pushed in the thrust direction along the second external side (67) of the first deflection element (64), wherein the first deflection element (64) folds over the first side of the insulator (25) herein on a first target line of the insulator (25), and subsequently one end (38) of a second side of the insulator (25) is pushed in the thrust direction along the second external side (69) of the second deflection element (65), wherein the second deflection element (65) herein folds over the second side on a second target line of the insulator (25).

2. Shaping tool (63) according to preceding Claim 1, **characterized in that** the first deflection element (64) on an upper side (74) of the first deflection element (64) has a first spring member (76) which is present so as to project from the upper side (74) of the first deflection element (64), wherein the first spring member (76) on the first deflection element (64) extends in the thrust direction of the insulator (25), wherein a front side (84) of the first spring member (76) is present so as to be spaced apart from the edge (71) of the first deflection element (64), wherein a spring member upper side (82) of the first spring member (76), when viewed in the thrust direction, proceeding from the upper side (74) of the first deflection element (64), runs away from the upper side (74) of the first deflection element (64) in such a way that in the forming procedure of the insulator (25) an external edge of the folded-over end (39) of the first side of the insulator (25) bears on a first spring member external side (78) of the first spring member (76).

3. Shaping tool (63) according to one of the preceding claims, **characterized in that** the shaping strip (27) has a fastening element (61) on the main body (54) so as to establish the shaping strip (27) on a shaping tool (63).

4. Shaping tool (63) according to one of the preceding claims, **characterized in that** the thrust strip (28) extends in a length, in a width and in a height, wherein the length is greater than the height and the height is greater than the width, wherein the thrust strip (28) has two large thrust strip external sides which extend in the height and in the length, wherein the thrust strip (28) has a first and a second small thrust strip external side which extend in the width and in the length, wherein a first small thrust strip external side on the first end has a depression (37) which extends along a longitudinal axis of the thrust strip (28) in such a way that in the forming procedure of the insulator (25) the folded-over ends (38, 39) of the first and of the second side of the insulator (25) can engage in the depression (37).

5. Transfer tool (10) having a shaping tool (63) according to one of the preceding claims, **characterized in that** the transfer tool (10) has a transfer magazine (20, 21), wherein the transfer magazine (20, 21) extends in a longitudinal direction, wherein the transfer magazine (20, 21) has a cavity (40) in which the insulator (25) is able to be introduced in the longitudinal direction of the transfer magazine (20, 21) by means of the thrust strip (28), wherein the cavity (40) is designed to taper conically in the longitudinal direction.

6. Transfer tool (10) according to preceding Claim 5, **characterized in that** the cavity (40) of the transfer magazine (20, 21) has a first and a second narrow cavity side (45, 46), wherein the cavity (40) has a first and a second wide cavity side (47, 48), wherein a first spring element (49) is present on a first internal side of the first wide cavity side (47) of the cavity (40) so as to project from the first internal side, wherein the first spring element (49) extends over the longitudinal extent of the cavity (40) in such a way that in the insertion procedure of the insulator (25) into the cavity (40) a first side of the insulator (25) is deformed into a cavity interior by the first spring element (49).

7. Transfer tool (10) according to one of preceding Claims 5 or 6, **characterized in that** a third spring element (53) is present on an end portion of the cavity (40) on the first narrow cavity side (45) so as to project from an internal side of the first narrow cavity side (45), wherein a fourth spring element (52) is present on the end portion (51) of the cavity (40) on the second narrow cavity side (46) so as to project from an internal side of the second narrow cavity side (46), wherein the third and the fourth spring element (52, 53) extend in the longitudinal extent of the cavity (40) in such a way that a third side of the insulator (25) is deformed into the cavity interior by the third spring element (52), and a fourth side of the insulator (25) is deformed into the cavity interior by the fourth spring element (53).

8. Machine (1) for producing an insulator (25), having a transfer tool (10) according to one of preceding Claims 5 to 7, or having a shaping tool (63) according to one of preceding Claims 1 to 4.

9. Machine (1) according to preceding Claim 8, **characterized in that** the machine (1) has a material magazine (2), an embossing device (3, 7), a blanking device (4), a flanging device (5), a transport device (6, 8) and/or a forming device (9).

10. Production method for producing an insulator (25) while using a transfer tool (10) according to one of preceding Claims 5 to 7, or while using a shaping tool (63) according to one of preceding Claims 1 or 4, and/or while using a machine (1) according to one of preceding Claims 8 or 9, wherein the production method comprises the following method steps:
- unwinding insulator material (15) from an insulator material roll (13) in a feeding direction, wherein the insulator material roll (13) is held so as to be movable in a material magazine (2);
- embossing a first bead (16) along the feeding direction into the unwound insulator material (15) by a first embossing device (3);
- blanking material from the unwound insulator material (15) in such a way that insulator material (15) is removed in the region of an external edge (17) of the insulator material (15);
- bending back the material remaining in the region of the external edge (17) of the insulator material (15) after the blanking procedure about the first bead (16) embossed in the feeding direction;
- embossing a second bead transversely to the feeding direction into the insulator material (15) by a second embossing device (7);
- cutting off one end of the unwound insulator material (15) transversely to the feeding direction in such a way that an insulator (25) is cut off;
- forming the insulator (25) by the shaping tool (63); and
- introducing the formed insulator (25) in the feeding direction of the insulator (25) into the transfer tool (10).

11. Production method for producing an insulator (25) according to preceding Claim 10, **characterized in that** the method step of forming the insulator (25) by the shaping tool (63) comprises the following method steps:
- forming the insulator (25) by the shaping tool (63) in such a way that the insulator (25) is present in a U-shape;
- pushing the insulator (25) onto the thrust strip (28) in such a way that the insulator (25) by way of the end side (17) of the insulator (25) rests on the detent (36) of the thrust strip (28);
- moving the insulator (25) in the thrust direction of the insulator (25) by way of the thrust strip (28) in such a way that the insulator (25) is moved along an upper side of the shaping strip (27); and
- forming one end (39) of the first side of the insulator (25) and one end (38) of the second side of the insulator (25) by the shaping tool (63).

12. Insulator (25) produced by the production method according to one of preceding Claims 10 or 11.

## Revendications

1. Outil de mise en forme (63) présentant une baguette de mise en forme (27), destiné à façonner un isolateur (25), **caractérisé en ce que** l'outil de mise en forme (63) présente une baguette de glissement (28), la baguette de glissement (28) étant de forme parallélépipédique et s'étendant le long d'un axe longitudinal, des faces externes (32 - 35) de baguette de glissement de la baguette de glissement (28), qui s'étendent le long de l'axe longitudinal, étant présentes de manière décalée vers l'intérieur au niveau d'une première extrémité (29) de la baguette de glissement (28), de telle sorte que l'isolateur (25) peut être glissé sur les faces externes (32 - 35) de baguette de glissement décalées vers l'intérieur, l'isolateur (25) pouvant être agencé contre les faces externes (32 - 35) de baguette de glissement décalées vers l'intérieur, une butée (36) étant réalisée dans la transition des faces externes (32 - 35) de baguette de glissement décalées vers l'intérieur vers les faces externes (32 - 35) de baguette de glissement restantes au niveau d'une deuxième extrémité (30) de la baguette de glissement (28), l'isolateur (25), dans son état agencé, se plaçant avec une face frontale (17) de l'isolateur (25) contre ladite butée, de telle sorte que l'isolateur (25) peut être déplacé avec la baguette de glissement (28) le long de la baguette de mise en forme (27) dans la direction de glissement de l'isolateur (25) et dans la direction de l'étendue de l'axe longitudinal de la baguette de glissement (28) afin de façonner l'isolateur (25) par la baguette de mise en forme (27), la baguette de mise en forme (27) présentant un corps de base (54) parallélépipédique, le corps de base (54) présentant une face supérieure (55), la baguette de mise en forme (27) présentant un premier et un deuxième élément de déviation (64, 65), le premier et le deuxième élément de déviation (64, 65) faisant saillie au niveau de la face supérieure (55) du corps de base (54) à partir de la face supérieure (55) du corps de base (54), le premier élément de déviation (64) étant relié avec une face inférieure du premier élément de déviation (64) à la face supérieure (55) du corps de base (54), le deuxième élément de déviation (65) étant relié avec une face inférieure du deuxième élément de déviation (65) à la face supérieure (55) du corps de base (54), le deuxième élément de déviation (65) étant réalisé de manière décalée par rapport au premier élément de déviation (64) au niveau du corps de base (54), le premier élément de déviation (64) présentant une première face externe (66), le premier élément de déviation (64) présentant une deuxième face externe (67), la deuxième face externe (67) du premier élément de déviation (64) se trouvant à l'opposé de la première face externe (66) du premier élément de déviation (64), la première et la deuxième face externe (66, 67) du premier élément de déviation (64) convergeant l'une vers l'autre au niveau d'une face avant (70) du premier élément de déviation (64) de telle sorte que le premier élément de déviation (64) présente, au niveau de la face avant (70) du premier élément de déviation (64), un bord (71), la deuxième face externe (67) du premier élément de déviation (64) s'éloignant, à partir de la face avant (70) du premier élément de déviation (64), vu dans la direction de glissement de l'isolateur (25), de la première face externe (66) du premier élément de déviation (64) de telle sorte que le premier élément de déviation (64) s'élargit à partir de la face avant (70) du premier élément de déviation (64), le deuxième élément de déviation (65) présentant une première face externe (68), le deuxième élément de déviation (65) présentant une deuxième face externe (69), la deuxième face externe (69) du deuxième élément de déviation (65) se trouvant à l'opposé de la première face externe (68) du deuxième élément de déviation (65), la première et la deuxième face externe (68, 69) du deuxième élément de déviation (65) convergeant l'une vers l'autre au niveau d'une face avant (72) du deuxième élément de déviation (65) de telle sorte que le deuxième élément de déviation (65) présente, au niveau de la face avant (72) du deuxième élément de déviation (65), un bord (73), la deuxième face externe (69) du deuxième élément de déviation (65) s'éloignant, à partir de la face avant (72) du deuxième élément de déviation (65), vu dans la direction de glissement de l'isolateur (25), de la première face externe (68) du deuxième élément de déviation (65) de telle sorte que le deuxième élément de déviation (65) vu dans la direction de glissement s'élargit à partir de la face avant (72) du deuxième élément de déviation (65), la baguette de mise en forme (27) étant présente de telle sorte que lors d'un processus de façonnage de l'isolateur (25), lors duquel l'isolateur (25) est glissé dans la direction de glissement sur le premier et le deuxième élément de déviation (64, 65), une extrémité (39) d'une première face de l'isolateur (25) est d'abord glissée le long de la deuxième face externe (67) du premier élément de déviation (64) dans la direction de glissement, le premier élément de déviation (64) pliant ainsi la première face de l'isolateur (25) au niveau d'une première ligne de consigne de l'isolateur (25) et, ensuite, une extrémité (38) d'une deuxième face de l'isolateur (25) est glissée le long de la deuxième face externe (69) du deuxième élément de déviation (65) dans la direction de glissement, le deuxième élément de déviation (65) pliant ainsi la deuxième face au niveau d'une deuxième ligne de consigne de l'isolateur (25).

2. Outil de mise en forme (63) selon la revendication précédente 1, **caractérisé en ce que** le premier élément de déviation (64) présente, au niveau d'une face supérieure (74) du premier élément de déviation (64), un premier organe à ressort (76) qui fait saillie à partir de la face supérieure (74) du premier élément de déviation (64), le premier organe à ressort (76) s'étendant au niveau du premier élément de déviation (64) dans la direction de glissement de l'isolateur (25), une face avant (84) du premier organe à ressort (76) étant présente à une certaine distance du bord (71) du premier élément de déviation (64), une face supérieure (82) d'organe à ressort du premier organe à ressort (76) vu dans la direction de glissement s'éloignant à partir de la face supérieure (74) du premier élément de déviation (64), de la face supérieure (74) du premier élément de déviation (64) de telle sorte que lors du processus de mise en forme de l'isolateur (25), un bord externe de l'extrémité pliée (39) de la première face de l'isolateur (25) se place contre une première face externe (78) d'organe à ressort du premier organe à ressort (76).

3. Outil de mise en forme (63) selon l'une des revendications précédentes, **caractérisé en ce que** la baguette de mise en forme (27) présente un élément de fixation (61) au niveau du corps de base (54), destiné à fixer la baguette de mise en forme (27) au niveau d'un outil de mise en forme (63).

4. Outil de mise en forme (63) selon l'une des revendications précédentes, **caractérisé en ce que** la baguette de glissement (28) s'étend selon une longueur, selon une largeur et selon une hauteur, la longueur étant supérieure à la hauteur et la hauteur étant supérieure à la largeur, la baguette de glissement (28) présentant de grandes faces externes de baguette de glissement, qui s'étendent selon la hauteur et la largeur, la baguette de glissement (28) présentant une première et une deuxième petite face externe de baguette de glissement, qui s'étendent selon la largeur et selon la longueur, une première petite face externe de baguette de glissement présentant au niveau d'une première extrémité un renfoncement (37) qui s'étend le long d'un axe longitudinal de la baguette de glissement (28), de telle sorte que lors du processus de façonnage de l'isolateur (25), les extrémités pliées (38, 39) de la première et de la deuxième face de l'isolateur (25) peuvent s'encliqueter dans le renfoncement (37).

5. Outil de transmission (10) présentant un outil de mise en forme (63) selon l'une des revendications précédentes, **caractérisé en ce que** l'outil de transmission (10) présente un chargeur de transmission (20, 21), le chargeur de transmission (20, 21) s'étendant dans une direction longitudinale, le chargeur de transmission (20, 21) présentant un espace creux (40) dans lequel l'isolateur (25) peut être introduit au moyen de la baguette de glissement (28) dans la direction longitudinale du chargeur de transmission (20, 21), l'espace creux (40) étant de forme conique dans la direction longitudinale.

6. Outil de transmission (10) selon la revendication précédente 5, **caractérisé en ce que** l'espace creux (40) du chargeur de transmission (20, 21) présente une première et une deuxième face étroite (45, 46) d'espace creux, l'espace creux (40) présentant une première et deuxième face large (47, 48) d'espace creux, un premier élément à ressort (49) faisant saillie au niveau d'une première face interne de la première face large (47) d'espace creux de l'espace creux (40) à partir de la première face interne, le premier élément à ressort (49) s'étendant sur l'étendue longitudinale de l'espace creux (40) de telle sorte que lors du processus d'introduction de l'isolateur (25) dans l'espace creux (40), une première face de l'isolateur (25) est déformée par le premier élément à ressort (49) à l'intérieur de l'espace creux.

7. Outil de transmission (10) selon l'une des revendications précédentes 5 ou 6, **caractérisé en ce qu'**un troisième élément à ressort (53) fait saillie au niveau d'une section d'extrémité de l'espace creux (40) au niveau de la première face étroite (45) d'espace creux à partir d'une face interne de la première face étroite (45) d'espace creux, un quatrième élément à ressort (52) faisant saillie au niveau d'une section d'extrémité (51) de l'espace creux (40) au niveau de la deuxième face étroite (46) d'espace creux à partir d'une face interne de la deuxième face étroite (46) d'espace creux, le troisième et le quatrième élément à ressort (52, 53) s'étendant dans la direction longitudinale de l'espace creux (40) de telle sorte qu'une troisième face de l'isolateur (25) est déformée par le troisième élément à ressort (52) à l'intérieur de l'espace creux et une quatrième face de l'isolateur (25) est déformée par le quatrième élément à ressort (53) à l'intérieur de l'espace creux.

8. Machine (1) destinée à la fabrication d'un isolateur (25) présentant un outil de transmission (10) selon l'une des revendications précédentes 5 à 7 ou présentant un outil de mise en forme (63) selon l'une des revendications précédentes 1 à 4.

9. Machine (1) selon la revendication précédente 8, **caractérisée en ce que** la machine (1) présente un chargeur de matériau (2), un dispositif d'estampage (3, 7), un dispositif de découpage à la presse (4), un dispositif de sertissage (5), un dispositif de transport (6, 8) et/ou un dispositif de façonnage (9).

10. Procédé de fabrication destiné à la fabrication d'un isolateur (25) à l'aide d'un outil de transmission (10) selon l'une des revendications précédentes 5 à 7 ou à l'aide d'un outil de mise en forme (63) selon l'une des revendications précédentes 1 ou 4 et/ou à l'aide d'une machine (1) selon l'une des revendications précédentes 8 ou 9,
le procédé de fabrication comprenant les étapes de procédé suivantes :
- dévidage de matériau (15) d'isolateur d'un rouleau (13) de matériau d'isolateur dans une direction d'avancement, le rouleau (13) de matériau d'isolateur étant tenu de manière mobile dans un chargeur (2) de matériau,
- estampage d'une première rainure (16) le long de la direction d'avancement dans le matériau (15) d'isolateur dévidé par un premier dispositif d'estampage (3),
- découpe à la presse de matériau du matériau (15) d'isolateur dévidé de telle sorte que le matériau (15) d'isolateur est éloigné dans la zone de bord externe (17) du matériau (15) d'isolateur,
- repliage du matériau restant après le processus de découpage à la presse dans la zone du bord externe (17) du matériau (15) d'isolateur autour de la rainure (16) estampée dans la direction d'avancement,
- estampage d'une deuxième rainure transversalement à la direction d'avancement dans le matériau (15) d'isolateur par un deuxième dispositif d'estampage (7),
- coupe d'une extrémité du matériau (15) d'isolateur dévidé transversalement à la direction d'avancement, de telle sorte qu'un isolateur (25) est coupé,
- façonnage de l'isolateur (25) par l'outil de mise en forme (63)
- introduction de l'isolateur (25) façonné dans la direction de glissement de l'isolateur (25) dans l'outil de transmission (10).

11. Procédé de fabrication destiné à fabriquer un isolateur (25) selon la revendication précédente 10, **caractérisé en ce que** l'étape de procédé du façonnage de l'isolateur (25) par l'outil de mise en forme (63) présente les étapes de procédé suivantes :
- façonnage de l'isolateur (25) par l'outil de mise en forme (63) de telle sorte que l'isolateur (25) présente une forme de U,
- glissement de l'isolateur (25) sur la baguette de glissement (28) de telle sorte que l'isolateur (25) se place avec la face frontale (17) de l'isolateur (25) contre la butée (36) de la baguette de glissement (28),
- déplacement de l'isolateur (25) dans la direction de glissement de l'isolateur (25) à l'aide de la baguette de glissement (28) de telle sorte que l'isolateur (25) est déplacé le long d'une face supérieure de la baguette de mise en forme (27),
- façonnage d'une extrémité (39) de la première face de l'isolateur (25) et d'une extrémité (38) de la deuxième face de l'isolateur (25) par l'outil de mise en forme (63).

12. Isolateur (25), fabriqué selon le procédé de fabrication selon l'une des revendications précédentes 10 ou 11.
